# EUROPÄISCHE PATENTSCHRIFT

(11) **EP 1 944 716 B1**
(45) Veröffentlichungstag und Bekanntmachung des Hinweises auf die Patenterteilung: **28.04.2010**
(21) Anmeldenummer: 07025016.2
(22) Anmeldetag: 21.12.2007
(51) Int. Cl.: G06F 21/24

(54) **Verfahren und Vorrichtung zum Sichern eines Dokuments mit eingefügtem Signaturabbild und biometrischen Daten in einem Computersystem**
Method and device for backing up a document with an inserted signature image and biometric information in a computer system
Procédé et dispositif de sécurisation d'un document comportant une signature apposée et des données biométriques dans un système informatique

(30) Priorität: 15.01.2007 US 884908 P
(43) Veröffentlichungstag der Anmeldung: 16.07.2008
(73) Patentinhaber: Stepover GmbH, 70599 Stuttgart (DE)
(72) Erfinder: Günther, Andreas, 70197 Stuttgart (DE)
(74) Vertreter: Kramer - Barske - Schmidtchen

(56) Entgegenhaltungen:
- WO-A-2006/111979
- US-A- 5 689 567
- US-B1- 6 307 955
- US-B1- 7 024 562
- SCHNEIER B: "Applied Cryptography" APPLIED CRYPTOGRAPHY, 1996, Seiten 38-40, XP002155112

## Beschreibung

### TECHNISCHES GEBIET

Die vorliegende Erfindung betrifft ein Verfahren zum Sichern eines Dokuments mit eingefügtem Signaturabbild und ggf. biometrischen Daten in einem Computersystem sowie ein entsprechend arbeitendes, computerbasiertes Signatursystem, mit dem ein Dokument biometrisch elektronisch unterzeichnet werden kann und dann dieses Dokument als sichere Datei mit eingefügtem Signatur- bzw. Unterschriftenbild bereit gestellt und manipulationssicher archiviert werden kann.

Außerdem betrifft die Erfindung ein Verfahren zur Inhouse-Kontrolle eines Dokuments, das nach dem vorgenannten Verfahren gesichert und in spezieller Weise verschlüsselt wurde.

Schließlich betrifft die vorliegende Erfindung auch ein Verfahren zur Prüfung der Echtheit eines unterschriebenen Dokuments, das gemäß einem der voranstehenden Verfahren gesichert wurde.

### HINTERGRUND DER ERFINDUNG

Heutzutage ist es mehr und mehr erforderlich, ein unterschriebenes Dokument revisionssicher bereit zu stellen. Eines so genannte biometrische elektronische Signatur bzw. Unterschrift hat den Vorteil, dass ein Medienbruch, d. h. der Ausdruck auf Papier zur Unterzeichnung, entfällt. Außerdem kann ein biometrisches Merkmal wie z.B. die Unterschrift nicht übertragen, gestohlen oder vergessen werden.

Die Unterschrift ist eine eindeutige Willenserklärung und ein seit langem anerkannter Vorgang zur Willensbeurkundung. Mit der biometrischen elektronischen Signatur wird dieser übliche Unterzeichnungsvorgang an sich nicht verändert; der Unterzeichnende muss aber nicht Mitglied in einem so genannten Trustcenter sein, wie es bei einigen digitalen Signaturverfahren notwendig ist. Überdies kann die z.B. die handgeschriebene biometrische elektronische Signatur von einem Schriftsachverständigen geprüft und beispielsweise auch mit Unterschriften auf Papier verglichen werden; ähnliches gilt für eine biometrische elektronische Signatur mittels Fingerabdruck oder Stimmmuster u.ä. deren Merkmale auch von anerkannten Sachverständigen nach lange erprobten Methoden geprüft werden können

Insbesondere regelt das in der Bundesrepublik Deutschland verabschiedete Gesetz zur elektronischen Signatur die Rahmenbedingungen für alle papierlosen Signaturverfahren, wie z. B. die digitale Signatur, wie sie in Verbindung mit so genannten Smartcards verwendet wird, und die hier relevante biometrische elektronische Signatur. Dieses Gesetz basiert auf der EU-Richtlinie zur elektronischen Signatur und löst damit das allein auf Deutschland begrenzte Gesetz zur digitalen Signatur von 1997 ab. Somit ist eine europaweite Grundlage geschaffen, auf deren Basis Produkte zur elektronischen Signatur grenzüberschreitend eingesetzt werden können. Man geht davon aus, dass auf dieser Weise die elektronische Signatur in Europa weiter Fuß fassen wird.

Entsprechend bilden große Unternehmen ihren internen Workflow mittlerweile fast ausschließlich elektronisch ab. Die Schnittstelle zur "Außenwelt" - beispielsweise Außendienstmitarbeiter wie Versicherungsvertreter etc. - bleibt aber bislang fast überall papierbehaftet. Studien haben nun gezeigt, dass auf jeden für die Herstellung von Papier ausgegebenen Dollar weitere 30 bis 60 Dollar für die weitere Verarbeitung anfallen. Die biometrische elektronische Signatur bietet den Unternehmen also die Möglichkeit, elektronische Dokumente auch elektronisch unterschreiben zu lassen.

Trotz aller Anstrengungen konnte eine biometrische elektronische Signatur einer außenstehenden Person bislang nicht durch elektronische Verfahren medienbruchfrei in einen elektronischen Workflow eingebunden werden. Dies hing neben der bis vor kurzem geltend Gesetzeslage auch mit den bisherigen Lösungsansätzen zusammen. Zwar erlauben es die elektronischen Unterschriftenerfassungen, die bisher bekannt sind, nunmehr, dass jeder Endkunde, ohne im Besitz eines speziellen Gerätes oder Zertifikates sein zu müssen, eine unverwechselbare Willenserklärung abgeben kann, die direkt in ein elektronisches Dokument als biometrische elektronische Unterschrift übernommen wird. Diese Form der biometrischen Signatur besitzt zwar bereits heute eine hohe Akzeptanz in der Bevölkerung (z.B. in Form der handgeschrieben elektronischen Signatur)- nicht zuletzt aufgrund der bekannten Paketzustelldienste -, allerdings sind für Unterschriften, die die Unterzeichnung von Verträgen etc. betreffen, die Bedenken gegen Missbrauch und Manipulation in der Bevölkerung noch sehr hoch. Trotzdem gewinnt die biometrische elektronische Signatur immer mehr an Bedeutung. Vom einfachen Beleg bis hin zum komplexen Vertragswerk, die biometrische Unterschrift ist aus dem Alltag nicht mehr wegzudenken. Allerdings sind hierzu die Vorkehrungen gegen Manipulation eines biometrisch unterschriebenen elektronischen Dokuments noch zu verbessern.

Es ist zwischenzeitlich bekannt, unter Zuhilfenahme von Geräten zur elektronischen Erfassung der Unterschrift - so genannte Signatur- oder Unterschriftenpads (siehe beispielsweise DE 10 2006 000 859.6 und die unter den Bezeichnungen blueMobile Pad, blueMobile Pad LCD, plusPad und plusPad LCD angebotenen Signaturpads der StepOver GmbH / Deutschland) - die handgeschriebene elektronische Unterschrift in die Prozesskette des digitalen Dokumentes von der Erstellung bis hin zur Archivierung ohne Medienbruch zu realisieren. Die zentrale Aufgabenstellung ist dabei die eindeutige Zuordnung einer handgeschriebenen elektronischen Unterschrift zu einem Dokument und zu einer Person. Es ist zwischenzeitlich auch bekannt, anhand der erfassten biometrischen Daten aus der handgeschriebenen elektronischen Unterschrift eine automatisierte Echtheitsprüfung möglich zu machen und damit einen Missbrauch fast gänzlich auszuschließen. Es hat sich allerdings gezeigt, dass die Sicherheit gegen Veränderungen und Manipulation eines biometrisch (z.B. handschriftlich) unterzeichneten elektronischen Dokuments noch verbessert werden kann.

Der guten Ordnung halber werden nachfolgend verschiedene für die vorliegende Erfindung wichtige Begriff definiert.
- elektronische Signatur:: es wird auf die entsprechende Definition in der Richtlinie 1999/93/EG des Europäischen Parlaments und des Rates über gemeinschaftliche Rahmenbedingungen für elektronische Signaturen verwiesen, die am 19.01.2000 im Amtsblatt der Europäischen Gemeinschaften (AB1. L 13 vom 19.1.2000, S. 12) veröffentlicht wurde.
- biometrische elektronische Signatur:: wie elektronische Signatur, zusätzlich mit einem eindeutigen biometrischen Identifikationsmerkmal einer Person wie z.B. ein Fingerabdruck, eine handgeschriebene Unterschrift, Stimmaufzeichnung etc., welche mit einer elektronischen Datei sicher verknüpft bzw. in diese eingefügt ist und mittels einer Prüfsumme mit dem zum Zeitpunkt der Signatur vorliegenden Dateiinhalt verbunden ist.
- Signaturabbild:: eine Visualisierung des Signaturmerkmals (also z.B. das zweidimensionale Abbild eines Fingerabdrucks, einer Signatur etc.)
- biometrische Daten:: Daten eines Personen gebunden Merkmals (wie eines Fingerabdrucks, einer Stimmaufzeichnung, einer Unterschrift etc.). Biometrische Daten enthalten im Gegensatz zum Signaturabbild z.T. höher auflösende und nicht zweidimensional darstellbare Informationen über das jeweilige Identifikationsmerkmal (z.B. 3D-Fingerabdruck, Schriftbild inkl. Schreibgeschwindigkeit, Druckverlauf etc.)
- elektronisches Dokument:: eine Datei, welche Daten enthält, die mittels einer geeigneten Vorrichtung in einer von einem Menschen lesbaren bzw. verständlichen Form ausgegeben und oder dargestellt werden kann.

In SCHNEIER B: "Applied Cryptography" APPLIED CRYPTOGRAPHY, 1996, Seiten 38-40, XP002155112 ist ein Verfahren zum Signieren von Dokumenten mit Hilfe der Verschlüsselung unter Verwendung eines öffentlichen Schlüssels und einer sogenannten one-way Hash Funktion erläutert. Es wird insbesondere vorgeschlagen, ein Dokument nicht zu signieren, sondern den Hash des Dokuments zu signieren. So wird ein one-way Hash eines Dokuments erzeugt. Dieser Hash wird mit einem privaten Schlüssel verschlüsselt, wodurch das Dokument signiert wird. Das Dokument und der signierte Hash werden dann weitergesandt. Es wird ein one-way Hash des Dokuments, das gesendet wurde, erzeugt. Unter Verwendung eines digitalen Signaturalgorithmus wird der signierte Hash mit dem öffentlichen Schlüssel des Senders entschlüsselt. Wenn der signierte Hash mit dem erzeugten Hash übereinstimmt, ist die Signatur gültig.

In der WO 2006/111979 A2 sind ein Verfahren und eine Vorrichtung zum Einfügen von Signaturen in elektronische Dokumente offenbart. Das Verfahren umfasst das Erzeugen des zu signierenden Dokuments auf einem Computer und das Anzeigen dieses erzeugten Dokuments auf einer Vorrichtung zum Einfügen einer digitalen Signatur. Diese Vorrichtung umfasst neben einer Anzeigevorrichtung ein Signaturmittel wie beispielsweise einen elektronischen Stift oder eine Fingerabdruck-Erfassungseinrichtung und zumindest einen Smart-Card-Leser. Damit wird das Dokument digital unterzeichnet. Das digital unterzeichnete Dokument wird verschlüsselt und zu einem Computer übertragen, um so eine nicht wieder zurückholbare Signatur zu erzeugen. Es soll insbesondere dafür gesorgt werden, dass der Unterzeichnende tatsächlich das unterzeichnet, was er sieht.

### DARSTELLUNG DER ERFINDUNG

Das der vorliegenden Erfindung zugrunde liegende technische Problem besteht darin, ein Verfahren und eine Vorrichtung bereit zu stellen, mit der ein elektronisches Dokument, das eine integrierte biometrische elektronische Unterschrift enthält, sicher und gegen jeglichen Missbrauch geschützt archiviert werden kann. Außerdem soll gemäß einem weiteres Aspekt der vorliegenden Erfindung auch die Prüfung der Echtheit dieses Dokuments gewährleistet sein und zudem auch dann keine Missbrauchsmöglichkeit in einem Unternehmen bestehen, wenn derartige Dokumente von beispielsweise Außendienstmitarbeitern an ihr Unternehmen auf elektronischem Weg versendet werden.

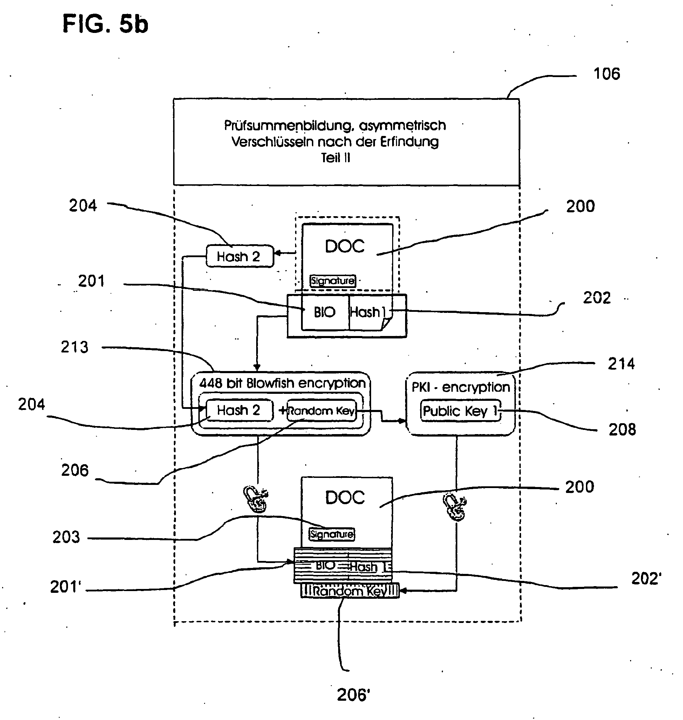

Dieses technische Problem wird gemäß einem ersten Aspekt der vorliegenden Erfindung durch ein Verfahren zum Sichern eines Dokuments mit eingefügtem Signaturabbild in einem Computersystem gelöst, bei dem das als Datei in einem bestimmten Datenformat vorliegende Dokument bereit gestellt wird. Außerdem wird in einem Schritt das diesem Dokument zuzuordnende Signaturabbild und optional weitere so genannte biometrische Daten der biometrischen elektronischen Signatur bereitgestellt. Gemäß dem erfindungsgemäßen Verfahren wird das digitale Signaturabbild an der gewünschten Stelle in dem Dokument eingefügt. Nun wird eine erste Prüfsumme über das Dokument mit dem eingefügten digitalen Signaturabbild und eventuell, also optional vorhandenen biometrischen Signaturdaten, mit Hilfe einer vorbestimmten ersten Hash-Funktion gebildet. Die erste Prüfsumme kann entweder über die Datei als solche (File Signature) oder den Dokumenteninhalt, d.h. die "sichtbaren/hörbaren" Daten des Dokumentes (Content Signature) und zzgl. über die ggf. vorhandenen biometrischen Daten gebildet werden. Außerdem wird eine zweite Prüfsumme über das Dokument mit dem eingefügten digitalen Signaturabbild mit Hilfe einer vorbestimmten zweiten Hash-Funktion gebildet; wiederum entweder über die Datei als solche (File Signature) oder den Dokumenteninhalt d.h. die "sichtbaren/hörbaren" Daten des Dokumentes (Content Signature), siehe hierzu auch Fig. 5b, und ein echter Zufallswert erzeugt. Daraufhin erfolgt ein symmetrisches Verschlüsseln der ersten Prüfsumme und der eventuell vorhandenen biometrischer Daten. Der Schlüssel für diese symmetrische Verschlüsselung ist dabei die Summe aus der zweiten Prüfsumme und dem erzeugten Zufallswert. Nunmehr erfolgt ein asymmetrisches Verschlüsseln des erzeugten Zufallswertes mit einem ersten öffentlichen Schlüssel eines ersten Schlüsselpaars, das aus einem ersten privaten Schlüssel und einem zugehörigen ersten öffentlichen Schlüssel besteht. Schließlich wird die symmetrisch verschlüsselte erste Prüfsumme und der asymmetrisch verschlüsselte Zufallswert an das Dokument angehängt. Letzteres geschieht je nach Dateityp des elektronischen Dokuments unterschiedlich. In einem PDF-Dokument werden die Daten entweder in einem Custom-Tag, in einem Object oder einem Signaturcontainer (PDF-Objekt für Signaturen) abgelegt (siehe auch PDF-Spezifikation). Im Fall einer TIFF-Datei werden die Daten entweder ans Ende des Datenstroms in der Datei geschrieben oder alternativ in die TIFF-Tags (siehe TIFF-Spezifikation). Bei XML-Dokumenten werden die Daten in einem entsprechenden XML-Tag in der XML-Datei gespeichert. Bei HTML-Dateien kann dies z.B. hinter einem Kommentartag erfolgen. Generell kann dieses Verfahren auf alle Dateien z.B. auch Audiodateien angewendet werden, Voraussetzung ist jedoch, dass die hinzugefügten (verschlüsselten) Daten und Prüfsummen so in die Datei integriert werden, dass diese weiterhin Standard konform bleibt d.h. dass z.B. ein PDF weiterhin fehlerfrei in einem entsprechenden Betrachtungsprogramm zur Anzeige gebracht werden kann und eine signierte Audiodatei weiterhin mit entsprechenden Standardabspielvorrichtungen wiedergegeben werden kann.

Ein solches computerimplementiertes Verfahren zum Sichern eines elektronischen Dokuments, in das eine zugehörige biometrische elektronische Signatur eingefügt ist, bietet erstmals den Vorteil, dass nicht einmal der eigentliche Betreiber und Benutzer des Verfahrens dieses Dokument verändern oder manipulieren kann, wenn der benutzte private Schlüssel bei einer dritten Person wie beispielsweise ein Notar hinterlegt wird. Damit ist eine äußerst sichere Archivierung dieses Dokuments und der zugehörigen Unterschrift möglich. Auch im Kommunikationsverkehr zwischen Außendienstmitarbeiter und Unternehmen kann ein solches Dokument sicher vor Zugriff verschickt werden. Insgesamt ist das nach dem Durchlauf des erfindungsgemäßen Verfahrens ausgegebene Dokument sicherer gegen Veränderungen durch Dritte als bisherige Lösungen. Es kann nun erstmals mit sehr hoher Sicherheit gewährleistet werden, dass das Dokument nach dem Signieren nicht verändert wurde. Die Prüfung auf Datenintegrität ist auch für eine gerichtliche Beweisführung einsetzbar und ist somit einem handunterschriebenen Dokument bei der Prüfung auf Echtheit dieses Dokuments gleich zu setzen.

Ein weiterer Vorteil des vorgeschlagenen erfindungsgemäßen Verfahrens besteht darin, dass es auch ohne weiteres möglich ist, mehrere Unterschriften auf dem gleichen Dokument zu integrieren. In dieser beispielhaften Ausführungsform der vorliegenden Erfindung sind also für den Fall, dass mehrere Unterschriften auf dem gleichen Dokument zu leisten sind, die Schritte b)-h) so viele Male zu durchlaufen, wie Unterschriften zu leisten sind. Dabei ist die Anzahl der Hash-Funktionen entsprechend zu erhöhen.

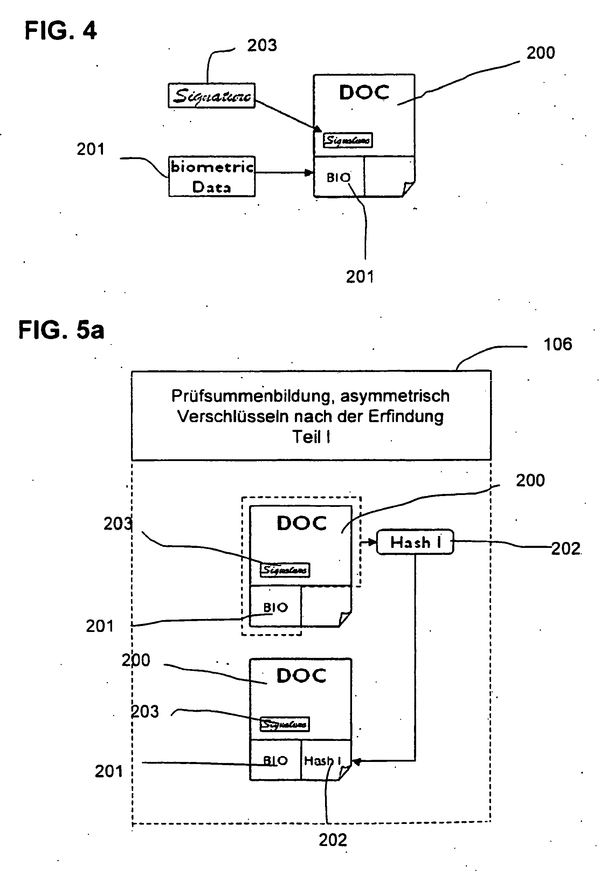

Nachfolgend wird eine weitere beispielhafte Ausführungsform der vorliegenden Erfindung beschrieben, die zum Einsatz kommen kann, wenn mehrere Signaturen auf einem einzigen Dokument zu leisten sind. So wird eine erste Signatur gemäß dem in der Fig. 4 - 6 dargestellten Verfahrensablauf eingefügt. Beim Einfügen einer zweiten Signatur (bzw. einer n-ten Signatur) wird dann wie folgt vorgegangen. Zunächst wird die Integrität des Dokumentes getestet (dazu wird ggf. die Inhouse-Prüfung der zuvor erläuterten Art durchgeführt, zu welcher man den zweiten öffentlichen Schlüssel oder ggf. den zweiten privaten Schlüssel benötigt). Fällt diese Prüfung positiv aus, so kann der verschlüsselte Doc-Hash aus dem Dokument entfernt werden. Alternativ kann der verschlüsselte Doc-Hash später mit den zweiten verschlüsselten Daten der neuen Signatur gespeichert werden.

Danach wird wie folgt vorgegangen. Es wird erneut (zuerst) ein Hash2 über das Dokument gebildet, wurde das Dokument nach der ersten Signatur nicht verändert, muss dabei der gleiche Hash2 herauskommen, wie er bei der Verschlüsselung der ersten Signatur verwendet wurde. Dieser Hash 2 heißt nun Hash2Before. Jetzt wird der Hash2Before gemeinsam mit den biometrischen Daten der zweiten Signatur an das Dokument angehängt und das digitale Signaturabbild wird eingefügt. Dann wird ein neuer Hashl über den Dokumenteninhalt, die enthaltenen digitalen Signaturabbilder und die biometrischen Daten der neuen Signatur gebildet. Soweit gleicht dies dem Vorgehen bei der ersten Signatur, aber es ergibt sich aufgrund der anderen biometrischen Daten und des hinzugefügten zweiten digitalen Signaturabbildes natürlich eine andere Prüfsumme. Zudem werden in diesen Hash1 aber auch der mit den neuen biometrischen Daten abgelegte alten Hash2Before mit einbezogen und der verschlüsselte Block der vorangegangenen Signatur. Dann wird der Block bestehend aus neuen biometrischen Daten, neuem Hash1 und Hash2Before symmetrisch verschlüsselt, zudem wird der asymmetrisch verschlüsselte Randomkey der vorherigen Signatur ebenfalls mit in den symmetrisch verschlüsselten Block gesteckt. Ggf. kann dazu noch der asymmetrisch verschlüsselte Doc-Hash mit in dem symmetrisch verschlüsselten Datenblock gespeichert werden, um ggf. durch den zur Verschlüsselung dieses Doc-Hash verwendeten Schlüssel des zweiten Schlüsselpaares Rückschlüsse auf Ort und oder Person ziehen zu können. Als Schlüssel zur symmetrischen Verschlüsselung kommt wieder (wie bei der ersten Signatur) die Summe aus dem neuen Hash2 und einem neuem Random-Key zum Einsatz.

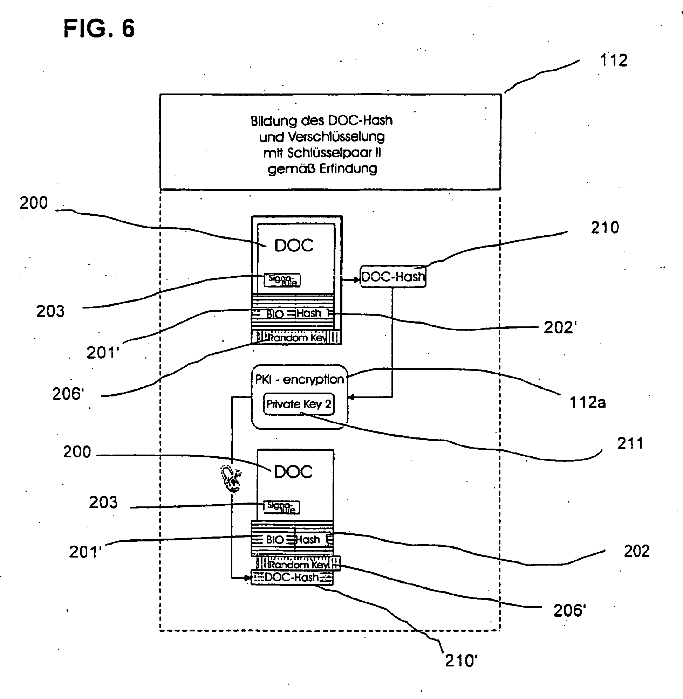

Danach enthält das Dokument also einen verschlüsselten Block der ersten Signatur, welcher die Biodaten und den ersten Hash1 enthält. Danach kommt ein weiterer verschlüsselter Block der zweiten Signatur, welcher die Biodaten der zweiten Signatur enthält, den dazugehörigen Hash1 sowie den Hash2 der vorherigen Signatur (hash2Before) und den (nochmals) verschlüsselten Random Key der ersten Signatur. Danach kommt der asymmetrisch verschlüsselte Random Key der zum Entschlüsseln der zweiten Signatur benötigt wird. Anschließend wird wieder ein Doc-Hash wie in der Fig. 6 schematisch dargestellt, der sich auf den Inhalt des Dokumentes und die darin enthaltenen (bzw. daran angefügten) verschlüsselten Daten bezieht. Um eine weiter Signatur einzufügen kann nun wieder wie oben beschrieben vorgegangen werden.

Die Prüfung eines Dokumentes mit mehreren Signaturabbildern kann beispielsweise wie folgt erfolgen: Man muss zur Prüfung den Random-Key bzw. des Zufallswertes der letzten Signatur entschlüsseln. Dann kann man die Prüfung mit Hilfe des dazugehörigen hash1 durchführen. Anschließend kann man den Random-Key der vorgehenden Signatur mit Hilfe des Hash2Before (welcher ja in dem Datenblock der bereits entschlüsselten Signatur gefunden werden kann) aus dem symmetrisch verschlüsselten Datenblock der vorhergehenden Signatur entschlüsseln und anschließend diesen (nochmals asymmetrisch verschlüsselten) RandomKey mit dem entsprechenden privaten Schlüssel entschlüsseln. Wenn es sich auch bei dieser Signatur nicht um die erste im Dokument handelt, wird dieser Vorgang analog bei der nächsten Signatur fortgesetzt (denn dann enthält ja auch der symmetrisch verschlüsselte Block dieser Signatur wieder einen Has2Before und den asymmetrisch verschlüsselten Random-Key der vorhergehenden Verschlüsselung). Der zur Verschlüsselung des Random-Key verwendete PrivateKeyl ist i.d.R. immer derselbe (zumindest solange alle Signaturen auf dem gleichen Computer hinzugefügt wurden, es kann aber auch jeweils an anderer sein, z.B. wenn die Signatur mit der einen Software auf dem einem Computer und die zweite mit einer anderen Software auf einem anderen Computer erfolgt ist). Zur Prüfung müssen dann ggf. alle privaten Schlüssel vorhanden sein. Der große Vorteil dieses Verfahrens gegenüber dem eingangs beschrieben Verfahren besteht darin, dass man bereits die erste Signatur sicher asymmetrisch versiegeln kann (z.B. um das Dokument zur Einholung einer zweiten Signatur zu versenden) und man kann trotzdem noch eine oder mehrere weitere Signaturen einfügen.

Die Überprüfung des Dokumentes mit Hilfe des Hash1 ist folglich nur noch bei der letzten Signatur möglich, wenn es jedoch gelingt, mit Hilfe der entsprechenden Hash2Before Prüfsummen die jeweils vorhergegangene Signatur zu entschlüsseln, so weiß man mit absoluter Sicherheit, dass das Dokument nicht zwischen dem Einfügen dieser Signatur und dem der vorhergegangenen Signatur manipuliert worden sein kann, d.h. man hat dadurch auch gleich eine sichere Gültigkeitsprüfung der vorhergegangen Signaturen.

Der Vollständigkeit halber ist noch anzumerken, dass bei einer beispielhaften weiteren Ausführungsform der vorliegenden Erfindung die einzelnen Hash-Funktionen auch identisch sein können. Werden verschiedene Hash-Funktionen verwendet, so müssen dann die entsprechenden Hash-Funktionen auch bei der Prüfung auf Echtheit des Dokuments entsprechend wieder verwendet werden. Dazu werden Informationen über die verwendeten Prüfsummenfunktionen in dem elektronischen Dokument hinterlegt.

Es ist inzwischen auch bekannt, dass die derzeit verfügbaren Signatur- oder Unterschriftenpads nicht nur das Signaturabbild in digitaler Form liefern, sondern weitere biometrische Signaturdaten bereitstellen. Derartige biometrische Signaturdaten können beispielsweise dynamische Daten wie der Druckverlauf sein, der vom Unterzeichner beim Ausführen der Unterschrift auf dem Signatur- bzw. Unterschriftenpad aufgebracht wird, aufgezeichnet wird. Die Aufzeichnung erfolgt in einer vorbestimmten Auflösung in einer vorgegebenen Druckgröße. Auch der Zeitverlauf, der vom Unterzeichner beim Ausführen der Unterschrift ermittelt werden kann, kann festgehalten werden. Somit wird der Zeitverlauf in einer vorbestimmten Auflösung in einer vorgegebenen Zeitgröße in Bezug auf ein vorgegebenes Koordinatensystem erfasst. Es sind ferner auch weitere/andere biometrische Größen wie Fingerabdruck, Handabdruck, Gesichtsmerkmale, Stimmmuster und Iris- und/oder Retinamuster des Unterzeichnenden feststellbar und können auch zur Identifizierung des Unterzeichnenden verwendet werden.

In einer weiteren beispielhaften Ausführungsform der vorliegenden Erfindung wird unter Berücksichtung der obigen Erläuterungen das erfindungsgemäße Verfahren zum Sichern eines Dokuments dahingehend erweitert, dass biometrische Signaturdaten in digitaler Form bereitgestellt werden und in das jeweilige elektronische Dokument eingebunden werden. Dies geschieht je nach elektronischem Dokument unterschiedlich. Es wird hierzu auf die voranstehenden Ausführungen zu den einzelnen Datentypen verwiesen. Nun wird eine erste Prüfsumme über das Dokument und das digitale Signaturabbild sowie die biometrischen Signaturdaten mit Hilfe der vorbestimmten ersten Hash-Funktion gebildet. Dieser Schritt entspricht dem Schritt d) der oben genannten grundsätzlichen Ausgestaltung eines erfindungsgemäßen Verfahrens. Entsprechend wird im obigen Schritt g) nunmehr der symmetrische Verschlüsselungsvorgang nicht nur mit der ersten Prüfsumme sondern auch mit den biometrischen Signaturdaten durchgeführt. Der Schlüssel für diese symmetrische Verschlüsselung ist die Summe aus der zweiten Prüfsumme und dem erzeugten Zufallswert. Sodann werden die symmetrisch verschlüsselten biometrische Signaturdaten und die symmetrisch verschlüsselte ersten Prüfsumme an das Dokument angehängt. Dies geschieht wie zuvor erläutert je nach elektronischem Dokument-Dateityp unterschiedlich. Zur Vermeidung von Wiederholungen wird auf die voranstehenden Ausführungen betreffend das "Anhängen" von Prüfsummen etc. verwiesen.

Diese weitere beispielhafte Ausführungsform der vorliegenden Erfindung hat den Vorteil, dass ein noch sicheres Identifizieren der Unterschrift und des Unterzeichnenden möglich ist. So wird nicht nur das digitale Signaturabbild dem Unterzeichnenden zugeordnet, sondern auch beispielsweise der Druckverlauf und und/oder der Zeitverlauf beim Ausführen der Signatur. Wie bereits erwähnt, können auch weitere bzw. andere biometrische Daten zur Zuordnung der Unterschrift zu dem Unterzeichnenden herangezogen und im erfindungsgemäßen Verfahren eingesetzt werden.

Eine noch verbesserte Verfahrensweise zum Sichern eines Dokuments mit eingefügtem Signaturabbild in einem Computersystem umfasst gemäß einer weiteren beispielhaften Ausführungsform der vorliegenden Erfindung die zusätzlichen nachfolgenden Verfahrensschritte:
k) Bilden einer ersten Gesamtprüfsumme über das Dokument (d.h. entweder über die Datei als solche (File Signature) oder den Dokumenteninhalt d.h. die "sichtbaren Daten des Dokumentes (Content Signature)) mit dem darin eingefügten digitalen Signaturabbild und allen angefügten Anhängen mit Hilfe einer vorbestimmten dritten Hash-Funktion,
l) Asymmetrisches Verschlüsseln der in Schritt k) erstellten Gesamtprüfsumme mit einem zweiten privaten- oder öffentlichen Schlüssel (je nach zusätzlichen Identifikationsansprüchen z.B. an die eingesetzte EDV-Einheit oder des Inhabers des zweiten Schlüsselpaars z.B. dem Außendienstmitarbeiter) eines zweiten Schlüsselpaars, das aus einem zweiten privaten Schlüssel und einem zugehörigen zweiten öffentlichen Schlüssel besteht,
m) Anfügen der asymmetrisch verschlüsselten ersten Gesamtprüfsumme an das Dokument, und optional
n) Ausgeben des Dokuments mit eingefügtem sichtbaren digitalen Signaturabbild und den unsichtbaren Anhängen wie den eventuell vorhandenen biometrischen Signaturdaten, der ersten Prüfsumme, des asymmetrisch verschlüsselten Zufallswertes und der asymmetrisch verschlüsselten ersten Gesamtprüfsumme.

Durch die Bildung einer ersten Gesamtprüfsumme und dem asymmetrischen Verschlüsseln dieser Gesamtprüfsumme mit einem zweiten privaten - oder öffentlichen Schlüssel (je nach zusätzlichen Identifikationsansprüchen z.B. an die eingesetzte EDV-Einheit oder des Inhabers des zweiten Schlüsselpaars z.B. dem Außendienstmitarbeiter) eines zweiten Schlüsselpaars wird eine Manipulation des in der zuvor erläuterten Weise gesicherten Dokuments noch besser verhindert. Erstmals wird bei einem gattungsgemäßen Verfahren zum Sichern eines Dokuments mit eingefügte Signaturabbild und asymmetrischer Verschlüsselung mit Hilfe eines zweiten privaten Schlüssels eines zweiten Schlüsselpaars sowie der angefügten asymmetrisch verschlüsselten ersten Gesamtprüfsumme an das Dokument eine äußerst gute Sicherung des Dokuments erzielt und damit ein gegen Änderungen äußerst gut geschütztes Dokument bereit gestellt.

Wie bereits eingangs erwähnt, können bei den zuvor beschriebenen beispielhaften Ausführungsformen der vorliegenden Erfindung die erste, zweite und dritte Hash-Funktion unterschiedlich sein. In einer weiteren beispielhaften Ausführungsform der vorliegenden Erfindung ist es möglich diese Hash-Funktionen identisch vorzusehen. Entsprechendes gilt auch für das noch später geschilderte weitere Verfahren gemäß der vorliegenden Erfindung zur Prüfung der Echtheit eines unterschriebenen Dokuments. Beispielsweise können folgende Hash-Funktionen in den zuvor beschriebenen erfindungsgemäßen Verfahren verwendet werden: SHA-256, SHA-384, SHA-516, RIPEMD-128, RIPEMD-160, Tiger. Es ist beispielsweise auch denkbar, dass ein Anwender wählen kann, welche der vorliegenden Hash-Funktionen in den zuvor beschriebenen erfindungsgemäßen Verfahren zum Einsatz kommen sollen. Beispielsweise ist eine derartige Funktionsweise dann sinnvoll, wenn aufgrund gesetzlicher Beschränkungen in bestimmten Ländern nicht alle Hash-Funktionen angeboten werden können oder neuere sicherere Hash-Funktionen verwendet werden sollen. Um die verwendeten Schlüsselpaare und Hashfünktionen bei einer späteren Prüfungen identifizieren zu können; werden entsprechende Informationen (ID des verwendeten Schlüsselpaares und der Name der verwendetet Prüfsummen-/Hashfunktion) unsichtbar im Dokument gespeichert. Diese Speicherung erfolgt analog zur Speicherung der verschlüsselten Prüfsummen und den ggf. mit verschlüsselten biometrischen Daten innerhalb der Datei.

Schließlich ist noch anzumerken, dass in den verschiedenen zuvor beschriebenen Ausführungsbeispielen erfindungsgemäßer Verfahren für den Schritt des symmetrischen Verschlüsselns beispielsweise der Verschlüsselungsalgorithmus Blowfish 448 Bit und für den Schritt der asymmetrischen Verschlüsselung RSA 128-1024 Bit verwendbar sind. Anstatt der asymmetrischen Verschlüsselung gemäß RSA sind allerdings auch andere asymmetrische Verschlüsselungsverfahren, wie sie hinlänglich bekannt sind, anwendbar; gleiches gilt für den symmetrischen Blowfish Algorithmus.

Gemäß einem weiteren Aspekt wird ein Verfahren zur Inhouse-Kontrolle eines Dokuments, dessen Prüfsummen und ggf. biometrischen Daten nach einem der zuvor beschriebenen erfindungsgemäßen Verfahren verschlüsselt wurden, bereitgestellt. Ein solches computerimplementiertes Kontrollverfahren umfasst das Bilden einer zweiten Gesamtprüfsumme über das gesamte Dokument mit dem darin eingefügten digitalen Signaturabbild und den jeweils angefügten Anhängen mit Hilfe der zweiten Hash-Funktion. Daraufhin erfolgt der Schritt des Entschlüsselns der an dem Dokument angefügten ersten Gesamtprüfsumme mit dem zweiten öffentlichen - oder privaten Schlüssel (je nach zusätzlichen Identifikationsansprüchen z.B. an die eingesetzte EDV-Einheit oder des Inhabers des zweiten Schlüsselpaars z.B. dem Außendienstmitarbeiter und dem dadurch gewählten privaten oder öffentlichen Schlüssels des zweiten Schlüsselpaars bei der Verschlüsselung) des zweiten Schlüsselpaars. Schließlich werden die gebildete zweite Gesamtprüfsumme und die entschlüsselte erste Gesamtprüfsumme miteinander verglichen. Sind die gebildete zweite Gesamtprüfsumme und die entschlüsselte erste Gesamtprüfsumme identisch, so handelt es sich bei dem vorliegenden Dokument mit hoher Sicherheit um das von dem Unterzeichnenden unterzeichnete Dokument. Falls ein Unterschied zwischen den beiden Werten besteht, ist davon auszugehen, dass das Dokument manipuliert wurde. Dieses erfindungsgemäße Verfahren dient, wie gesagt, zur Inhouse-Kontrolle um prüfen zu können, ob beispielsweise während eines Übertragungsvorgangs eines Dokuments dieses Dokument Veränderungen erfahren hat und lässt ggf. über die ID des bei der Verschlüsselung verwendeten zweiten Schlüsselpaars Rückschlüsse auf die Person oder das Gerät zu, welchem dieses Schlüsselpaar zugeordnet werden kann. Diese erste Stufe der Prüfung des erfindungsgemäß verschlüsselten Verfahrens lässt aber noch keine (oder zumindest keine sichere) Prüfung auf die Person zu, welches dieses Dokument signiert hat und auf deren biometrische Daten. Dazu dient das nachfolgend beschriebene Verfahren zur Prüfung der Echtheit eines unterschriebenen Dokuments gemäß der vorliegenden Erfindung.

Gemäß einem weiteren Aspekt der vorliegenden Erfindung wird ein Verfahren zur Prüfung der Echtheit eines unterschriebenen Dokuments, das gemäß einem Verfahren gesichert wurde, wie es zuvor beschrieben wurde, bereit gestellt. Ein solches Prüfverfahren umfasst, dass eine dritte Prüfsumme über das Dokument, die Datei als solche (File Signature) oder den Dokumenteninhalt d.h. die "sichtbaren Daten des Dokumentes (Content Signature)) mit den darin eingefügten Signaturabbild gebildet wird. Dann erfolgt das Entschlüsseln des Zufallswertes mit Hilfe des (ggf. beim Notar hinterlegten) privaten Schlüssels des ersten Schlüsselpaars. Die Summe der dritten Prüfsumme und des Zufallswertes wird dann benutzt, um die symmetrisch verschlüsselte Prüfsumme über das Dokument und die ggf. angefügten biometrischen Daten, sowie die ggf. mit dieser Prüfsumme zusammen verschlüsselten biometrischen Daten zu entschlüsseln. Wurde das Dokument zwischenzeitlich verändert, kann diese Entschlüsselung nicht mehr stattfinden, da dann die zur Entschlüsselung benötigte Prüfsummeeine andere ist, als die, die zur Verschlüsselung verwendet wurde. Nun wird eine Prüfsumme über das Dokument mit dem eingefügten Signaturabbild und eventuell, also optional vorhandenen biometrischen Signaturdaten gebildet; entweder über die Datei als solche (File Signature) oder den Dokumenteninhalt d.h. die "sichtbaren/hörbaren" Daten des Dokumentes (Content Signature) und zzgl. über die ggf. vorhandenen biometrischen Daten. Wenn diese Prüfsumme mit der entschlüsselten Prüfsumme übereinstimmt, steht mit Sicherheit fest, dass weder das Dokument noch die daran enthalten biometrischen Daten nach dem Signaturvorgang verändert wurden. Nun können die biometrischen Daten zur Personenidentifikation an einen entsprechenden Sachverständigen (z.B. Schriftsachverständigen) übergeben werden.

Ein weiterer Aspekt der vorliegenden Erfindung betrifft ein Signatursystem zur Signierung eines Dokuments und zur Bereitstellung einer sicheren Datei mit eingefügtem digitalen Signaturabbild bzw. Unterschriftenbild. Ein solches computergestütztes Signatursystem umfasst zum einen ein Signaturgerät, eine Datenverarbeitungseinrichtung, die mit dem Signaturgerät in verschlüsselter Kommunikationsverbindung steht, und eine Ausgabeschnittstelle. Das einen Teil des Signatursystems darstellende Signaturgerät besteht zumindest aus einem Signaturerfassungsfenster, auf dem mittels einer Schreibeinrichtung eine Signatur durchzuführen ist, und einer Signaturdatenerfassungseinrichtung, mit der neben dem Signaturabbild optional auch biometrische Signaturdaten erfasst werden. Die Signaturdaten, die mittels dieser Einrichtung erfasst werden, umfassen wenigstens die Koordinaten, der auf dem Signaturerfassungsfenster geleisteten Signatur in einer vorbestimmten Auflösung in einem vorgegebenen Koordinatensystem. Alternativ kann es sich auch um ein Signaturerfassungsgerät handeln welches andere biometrische Daten z.B. mittels eines Fingerprintscanners oder einer Kamera etc. erfasst und diese Daten gesichert z.B. verschlüsselt an die Datenverarbeitungseinrichtung übermittelt.

Die Datenverarbeitungseinrichtung wie beispielsweise ein Computer, an dem das Signaturgerät des erfindungsgemäßen Signatursystems angeschlossen ist, umfasst zumindest die nachfolgend genannten Einrichtungen. So ist eine Speichereinrichtung vorhanden, in der das Dokument und die Signaturdaten abzuspeichern sind. Ferner ist eine erste Prüfsummenbildnereinrichtung vorhanden, mit der eine erste Prüfsumme über das Dokument und die eventuell angefügten biometrischen Signaturdaten mit Hilfe einer vorbestimmten ersten Hash-Funktion zu bilden ist. Es ist außerdem eine zweite Prüfsummenbildnereinrichtung vorhanden, mit der eine zweite Prüfsumme über das Dokument und dem in das Dokument eingefügten digitalen Signaturabbild mit Hilfe einer zweiten Hash-Funktion zu bilden ist. Mittels eines echten Zufallszahlengenerators, der in der Datenverarbeitungseinrichtung integriert ist, wird ein Zufallswert erzeugt. Die Datenverarbeitungseinrichtung des erfindungsgemäßen Signatursystems umfasst außerdem eine symmetrische Verschlüsselungseinrichtung und eine asymmetrische Verschlüsselungseinrichtung. Dies symmetrische Verschlüsselungseinrichtung ist dazu ausgebildet, eine symmetrische Verschlüsselung der ersten Prüfsumme und der eventuell vorhandenen biometrischen Signaturdaten auszuführen, wobei der Schlüssel für die symmetrische Verschlüsselung die Summe aus der zweiten Prüfsumme und dem mittels des Zufallszahlengenerators erzeugten Zufallswerts ist. Die asymmetrische Verschlüsselungseinrichtung ist dazu ausgebildet, eine erstellte Gesamtprüfsumme mit einem zweiten privaten Schlüssel eines zweiten Schlüsselpaars asymmetrisch zu verschlüsseln. Die Gesamtprüfsumme ist dabei die Prüfsumme über das Dokument mit dem darin eingefügten digitalen Signaturabbild und den unsichtbar angefügten Anhängen mit Hilfe einer vorbestimmten dritten Hash-Funktion. Anzumerken ist, dass dieser zweite private Schlüssel Teil eines Schlüsselpaars ist, das auch einen zugehörigen zweiten öffentlichen Schlüssel umfasst. Schließlich ist die Ausgabeschnittstelle der Datenverarbeitungseinrichtung des erfindungsgemäßen Signatursystems derart ausgebildet, dass an dieser Ausgabeschnittstelle das Dokument mit eingefügtem sichtbarem digitalen Signaturabbild und den unsichtbaren Anhängen bereitgestellt wird. Damit lassen sich dann derartige Dokumente ohne weiteres auch über beispielsweise externe Netzwerke wie das Internet versenden.

Eine weitere beispielhafte Ausführungsform eines erfindungsgemäßen Signatursystems umfasst eine Signaturdatenerfassungseinrichtung, die neben oder anstatt der/den Koordinaten der auf dem Signaturerfassungsfenster geleisteten Signatur auch weitere oder andere biometrische Daten erfasst. Diese weiteren bzw. anderen biometrischen Daten können beispielsweise die zuvor genannten Merkmale betreffen. Insbesondere umfasst eine solche Signaturdatenerfassungseinrichtung also zumindest der nachfolgenden Einrichtungen: Druckerfassungsvorrichtung, Zeitverlauferfassungseinrichtung, oder Fingerabdruckerfassungseinrichtung, oder Handabdruckerfassungseinrichtung, oder Gesichtserfassungseinrichtung, oder Stimmmustererfassungseinrichtung, oder Iris- und/oder Retinaerfassungseinrichtung, oder eine Kombination mehrere dieser Verfahren. Die genannten Erfassungseinrichtungen sind bereits im Hinblick auf ihre Ausgestaltung und Funktionsweise im Bezug auf die erfindungsgemäßen Verfahren zuvor näher erläutert worden. Die genannte Iris- und/oder Retinaerfassungseinrichtung ist dazu ausgebildet zumindest bestimmte Bereiche der Iris- und/oder Retina eines bestimmten Auges des Unterzeichners, der die Signatur geleistet hat, in einer vorbestimmten Auflösung in einem vorgegebenen Koordinatensystem zu erfassen.

Eine weitere beispielhafte Ausführungsform der vorliegenden Erfindung sieht vor, dass die oben genannten weiteren Einrichtungen zum Erfassen weiterer biometrischer Daten gegenüber Manipulation von außen zumindest mit einer verschlüsselten Übertragung und einer Rückverfolgbaren Hardware ID geschützt ist. Dadurch wird verhindert, dass fremde Körpermerkmale, die nicht dem Unterzeichnenden zuzurechnen sind, der von dem Unterzeichnenden geleisteten Unterschrift zugeordnet werden können. Insbesondere ist dazu herauszustellen, das derartige zusätzliche Einrichtungen zum Erfassen weiterer biometrischer Daten beispielsweise in einem Gehäuse untergebracht sind, das auch das Signaturgerät wie beispielsweise eine Signaturpad oder Unterschriftenpad umfasst.

Schließlich umfasst ein weiterer Aspekt der vorliegenden Erfindung ein computerlesbares Medium mit darauf befindlichen durch einen Computer ausführbaren Anweisungen, die bewirken, dass das Computersystem ein Verfahren zum Sichern eines Dokuments mit eingefügtem Signaturabbild, wie sie zuvor erläutert wurden, ausführt. Ein weiterer Aspekt der vorliegenden Erfindung betrifft ein computerlesbares Medium mit darauf befindlichen, durch einen Computer ausführbaren Anweisungen, die bewirken, dass das Computersystem das Verfahren zur Inhouse-Kontrolle eines Dokuments, das nach einem der zuvor beschriebenen erfindungsgemäßen Verfahren verschlüsselt wurde, ausführt. Schließlich betrifft die vorliegende Erfindung gemäß einem weiteren Aspekt ein computerlesbares Medium mit darauf befindlichen durch einen Computer ausführbaren Anweisungen, die bewirken, dass das Computersystem das Verfahren zur Prüfung der Echtheit eines unterschriebenen Dokuments, wie es zuvor beschrieben wurde, ausführt. Derartige computerlesbare Medien sind hinlänglich bekannt und brauchen hier nicht weiter beschrieben werden. Insbesondere sind hierunter Disketten, Festplatten, CD-Roms etc. zu subsumieren. Außerdem betrifft die Erfindung verschiedene Computerprogramme, die durch einen Computer ausführbare Anweisungen umfassen, die bewirken, dass das Computersystem die zuvor erläuterten verschiedenen Verfahren ausführt.

### KURZE BESCHREIBUNG DER ZEICHNUNGEN

Im Folgenden sind zur weiteren Erläuterung und besseren Beschreibung mehrere Ausführungsbeispiele der vorliegenden Erfindung unter Bezugnahme auf die beigefügten Zeichnungen näher beschrieben. Es zeigt:
- Fig. 1: eine schematische Ansicht eines erfindungsgemäßen Signatursystems gemäß einer ersten Ausführungsform der vorliegenden Erfindung umfassend ein Signaturpad und eine Datenverarbeitungseinrichtung,
- Fig. 2: eine schematisierte Flussdiagrammdarstellung, in der ein 1. Teil eines Flussdiagramms des Verfahrens gemäß einer ersten Ausführungsform der Erfindung veranschaulicht ist,
- Fig. 3: eine schematisierte Flussdiagrammdarstellung, in der ein 2. Teil des in der Fig. 2 gezeigten Flussdiagramms des Verfahrens gemäß der ersten Ausführungsform der Erfindung veranschaulicht ist,
- Fig. 4: eine schematisierte Darstellung eines Dokuments, wie es in dem erfindungsgemäßen Verfahren der vorliegenden Erfindung, die in den Fig. 1-3 gezeigt ist, verwendet wird,
- Fig. 5a: eine schematisierte Darstellung eines 1. Teils eines Verfahrensabschnitts des in den Fig. 1-3 veranschaulichten erfindungsgemäßen Verfahrens,
- Fig. 5b: eine schematisierte Darstellung eines 2. Teils des in der Fig. 5a gezeigten Verfahrensabschnitts des erfindungsgemäßen Verfahrens,
- Fig. 6: eine schematisierte Darstellung eines Verfahrensabschnitts des in den Fig. 1-3 veranschaulichten erfindungsgemäßen Verfahrens,
- Fig. 7: eine schematisierte Darstellung des erfindungsgemäßen Verfahrens zur InhouseKontrolle eines Dokuments, das nach einem der erfindungsgemäßen Verfahren verschlüsselt wurde,
- Fig. 8: eine schematisierte Darstellung einer weiteren Ausführungsform des erfindungsgemäßen Verfahrens zur Prüfung im Gerichtsfall eines erfindungsgemäß gesicherten Dokuments.

### DETAILLIERTE ERLÄUTERUNG DER BEISPIELHAFTEN AUSFÜHRUNGSFORMEN DER VORLIEGENDEN ERFINDUNG

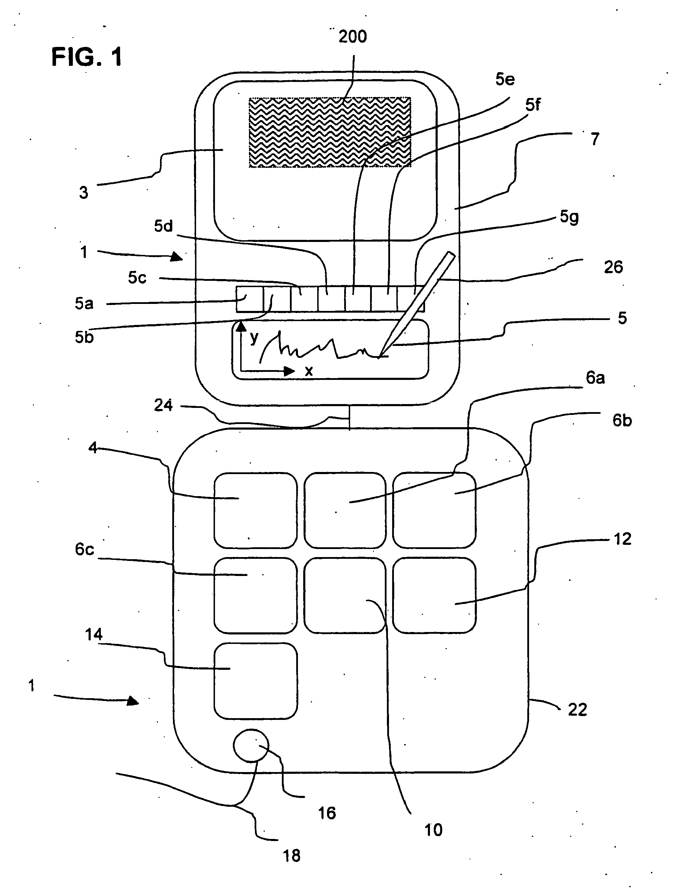

In der Fig. 1 ist in einer stark schematisierten Darstellung eine erste beispielhafte Ausführungsform eines erfindungsgemäßen Signatursystems gezeigt. So umfasst dieses Signatursystem ein so genanntes Signatur- bzw. Unterschriftenpad 1, das in der hier gezeigten Ausführungsform in einem einzigen Gehäuse 7 neben einem Signaturerfassungsfenster 5 ein das zu unterschreibende Dokument 200 zeigendes Display 3 umfasst, welches in der Praxis unterhalb des durchsichtigen Signaturerfassungsfenster liegt, so das man die Bewegung des Stiftes während der Unterschrift auf dem darunter liegenden Bildschirm verfolgen kann. Der guten Ordnung halber ist anzumerken, dass ein erfindungsgemäßes Signatursystem auch ein Signaturgerät 1 enthalten kann, in dem das Display 3 fehlt. Bei der hier gezeigten Ausführungsform ist das Signaturerfassungsfenster 5 so ausgebildet, dass hierauf mit einem Stift 26 in üblicher Weise wie auf einem Blatt Papier eine Unterschrift 203 geleistet werden kann. Bei dieser Ausführungsform wird neben dem eigentlichen Signaturabbild 203 auch der beim Ausführen der Unterschrift 203 mittels des Stiftes 26 auf dem Signaturerfassungsfenster 5 ausgeübte Druck und der Zeitverlauf erfasst. Die hierfür notwendigen Erfassungseinrichtungen 5a (für die Druckerfassung) und 5b (für die Erfassung des Zeitverlaufs) sind in dem Gehäuse 7 des Signaturgerätes 1 enthalten und hinlänglich bekannt, so dass hierauf nicht näher einzugehen ist.

In der hier gezeigten Ausführungsform der Erfindung sind zudem weitere Erfassungseinrichtungen stark schematisiert gezeigt, mit denen die nachfolgenden Körpermerkmale des Unterzeichnenden erfasst werden können:
- Fingerabdruckerfassungseinrichtung 5c, mit der der Fingerabdruck zumindest eines Fingers einer vorbestimmten Hand des Unterzeichners, der die Signatur 203 geleistet hat, in einer vorbestimmten Auflösung in einem vorgegebenen Koordinatensystem (x, y) erfasst wird,
- Handabdruckerfassungseinrichtung 5d, mit der der Handabdruck einer vorbestimmten Hand des Unterzeichners, der die Signatur 203 geleistet hat, in einer vorbestimmten Auflösung in einem vorgegebenen Koordinatensystem x, y erfasst wird,
- Gesichtserfassungseinrichtung 5e, mit der zumindest bestimmte Gesichtspartien des Unterzeichners, der die Signatur 203 geleistet hat, in einer vorbestimmten Auflösung in einem vorgegebenen Koordinatensystem x, y erfasst werden,
- Stimmmustererfassungseinrichtung 5f, mit der ein Stimmmuster eines Unterzeichners, der die Signatur 203 geleistet hat, in einer vorbestimmten Auflösung in einem vorgegebenen Koordinatensystem x, y erfasst wird,
- Iris- und/oder Retinaerfassungseinrichtung 5g, mit der zumindest bestimmte Bereiche der Iris und/oder der Retina eines vorbestimmten Auges des Unterzeichners, der die Signatur 203 geleistet hat, in einer vorbestimmten Auflösung in einem vorgegebenen Koordinatensystem (x, y) erfasst werden.

Zusätzlich zu den zuvor genannten Erfassungsvorrichtungen und den hierdurch erhaltenen Personen bezogenen Daten kann auch noch in der Vorrichtung eine die Vorrichtung individualisierende Identitätsnummer hinterlegt sein, die gemeinsam mit den erfassten Daten übertragen wird.

Der Ordnung halber ist hier anzumerken, das ein erfindungsgemäßes Signaturerfassungsgerät ggf. nur in der Lage sein muss, eine der genanten biometrischen Merkmale oder Kombinationen einiger weniger biometrischen Merkmale zu erfassen. Insofern ist auch ein Fingerprintscanner, der die biometrischen Daten eines Fingerabdrucks in ausreichender Qualität erfasst und gesichert (d.h. verschlüsselt überträgt) und zudem eine ID mit sendet, die später Rückschlüsse auf das Signaturgerät (also z.B. den Fingerprintscanner) zulässt, als erfindungsgemäßes Signaturerfassungsgerät anzusehen.

Bei der in der Fig. 1 dargestellten Ausführungsform eines erfindungsgemäßen Signatursystems ist das Signaturgerät 1 über eine Leitung 24 mit einer Datenverarbeitungseinrichtung 2 verbunden. Über die Verbindung 24 werden die beim Ausführen der Unterschrift 203 mittels des Stifts 26 erfassten, oben genannte biometrischen Daten zur weiteren Ver- und Bearbeitung an die Datenverarbeitungseinrichtung 2 geleitet. Es ist im Übrigen anzumerken, dass über die Leitung 24 beispielsweise auch von der Datenverarbeitungseinrichtung 2 Daten, wie beispielsweise das in dem Display 3 anzuzeigende Dokument 200, übertragen werden können. Die Kommunikation des Signaturgerätes mit der Datenverarbeitungseinrichtung erfolgt gesichert (d.h. verschlüsselt).

Die Datenverarbeitungseinrichtung 2 umfasst ein Gehäuse 22, in dem verschiedene Einrichtungen 4, 6a, 6b, 8, 10, 12 und 14 untergebracht sind. So ist eine Speichereinrichtung 4 vorhanden, in der das Dokument 200 und die zugehörigen Signaturdaten abzuspeichern sind. Die Signaturdaten umfassen hier zumindest die Daten des Signaturabbildes 203 in vorbestimmter Auflösung in Bezug auf ein vorbestimmtes Koordinatensystem x, y, wie es in der Fig. 1 für den Fall der biometrischen Erfassung der handgeschriebenen Unterschrift in dem Signaturerfassungsfenster 5 angedeutet ist.

Ferner ist eine erste Prüfsummenbildnereinrichtung 6a vorhanden, die derart ausgebildet ist, dass eine erste Prüfsumme über das Dokument 200 und später noch zu erläuternde Anhänge mit Hilfe einer vorbestimmten ersten Hash-Funktion gebildet wird. Eine zweite Prüfsummenbildnereinrichtung 6b ist derart ausgebildet, dass eine zweite Prüfsumme über das Dokument 200 und später noch zu erläuternde Anhänge mit Hilfe einer vorbestimmten zweiten Hash-Funktion gebildet wird. Eine dritte Prüfsummenbildnereinrichtung 6c ist dazu ausgebildet, eine dritte Prüfsumme über das Dokument 200 und dem in das Dokument 200 eingefügten Signaturabbild 203 sowie den eventuell vorhandenen weiteren Anhängen mit Hilfe einer dritten Hash-Funktion zu bilden.

Ein weiterer Bestandteil der Datenverarbeitungseinrichtung 2 ist ein echter Zufallszahlengenerator 10, mit dem Zufallswerte erzeugt werden. Dieser Zufallszahlengenerator 10 liefert einen Zufallswert 206 an eine symmetrische Verschlüsselungseinrichtung 12, die ebenfalls Teil der Datenverarbeitungseinrichtung 2 ist. Diese symmetrische Verschlüsselungseinrichtung 12 ist dazu ausgebildet, die biometrischen Signaturdaten 201 und die erste Prüfsumme 202 symmetrisch zu verschlüsseln. Der hierbei verwendete Schlüssel ist dabei durch die Summe aus der zweiten Prüfsumme 204 und dem erzeugten Zufallswert 206 gebildet.

Schließlich ist eine asymmetrische Verschlüsselungseinrichtung 14 vorhanden, die dazu ausgebildet ist, eine Gesamtprüfsumme 210 mit einem zweiten privaten Schlüssel 211 eines zweiten Schlüsselpaars 211, 212 asymmetrisch zu verschlüsseln. Dieses zweite Schlüsselpaar besteht aus dem zweiten privaten Schlüssel 211 und einem zugehörigen zweiten öffentlichen Schlüssel 212.

Ein weiterer Bestandteil der Datenverarbeitungseinrichtung 2 ist eine Ausgabeschnittstelle 16, an der das Dokument 200 mit eingefügtem sichtbaren Signaturabbild 203 und unsichtbaren Anhängen 201', 202', 206' und 210', die später noch erläutert werden, bereitgestellt wird. So können dann über die Leitung 18 der Ausgabeschnittstelle 16 das Dokument 200 mit eingefügten sichtbaren Signaturabbild 203 und den an dem Dokument 200 angehängten unsichtbaren Anhängen 201', 202', 206' und 210' beispielsweise über ein weltweites Netzwerk wie das Internet an einen Adressaten wie beispielsweise ein Unternehmen versandt werden.

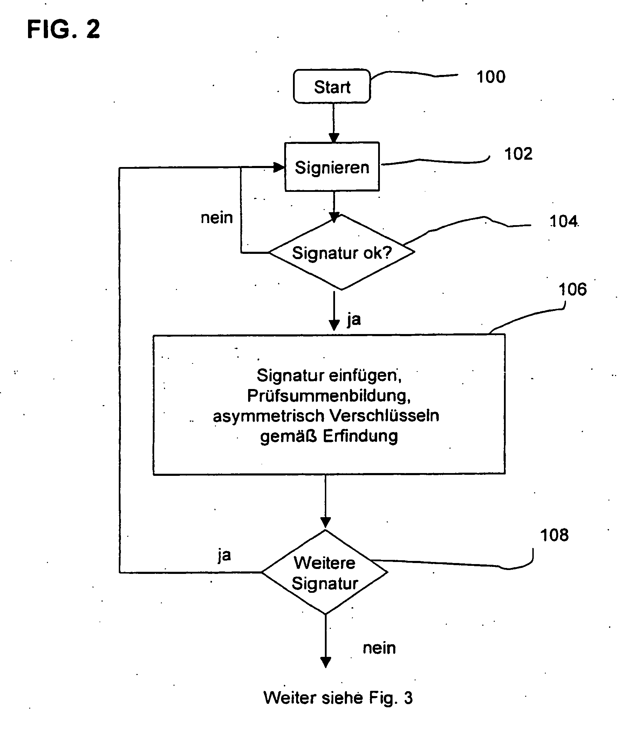

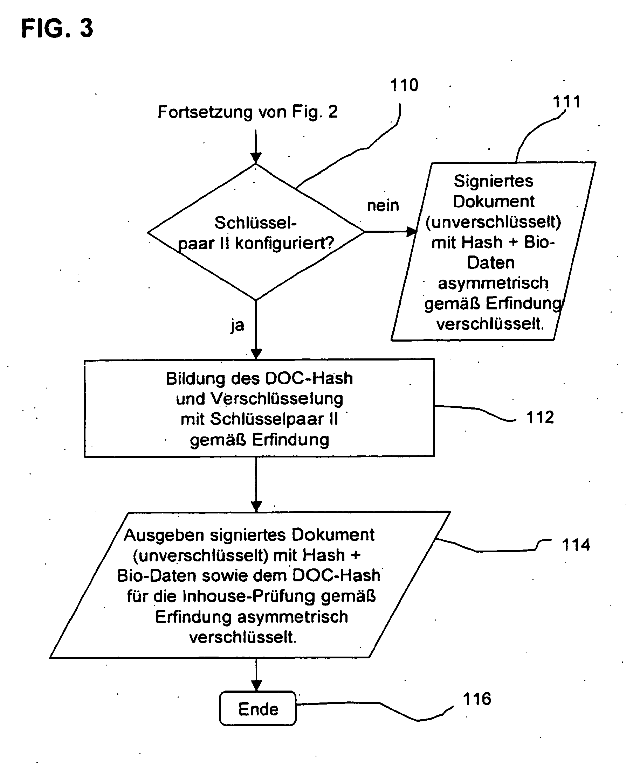

In den Fig. 2 und 3 ist der grundsätzliche erfindungsgemäße Verfahrensablauf einer ersten Ausführungsform des erfindungsgemäßen Verfahrens zum Sichern eines Dokuments 200 mit eingefügtem Signaturabbild 203 gezeigt. So wird beispielsweise durch Anschalten des Signaturgeräts 1 das Verfahren mit dem Schritt 100 gestartet. Das Signaturgerät 1 ist damit bereit, die Signatur bzw. die biometrischen Daten eines Unterzeichnenden mittels des Stiftes 26 auf dem Signaturerfassungsfenster 5 zu erfassen. Gleichzeitig kann auch gemäß dem ersten Schritt des erfindungsgemäßen Verfahrens das Dokument 200 als Datei in einem bestimmten Datenformat (beispielsweise als PDF-Datei, WORD-Datei, TIFF-Datei, JPG-Datei, wave, mp3, divx, avi etc.) bereitgestellt werden und in dem Display 3 des Signaturgeräts 1 angezeigt werden. Sobald die Signatur mit dem Stift 26 in dem Signaturerfassungsfenster 5 des Signaturgeräts 1 geleistet wurde, werden die erfassten biometrischen Daten als digitales Signaturabbild 203 bereitgestellt. Dieser Signierschritt 102 ist in der Fig. 2 ebenfalls gezeigt.

Wie bereits zuvor erwähnt, können je nach Ausstattung des Signaturgeräts 1 neben dem eigentlichen Signaturabbild 203 mit den zugehörigen biometrischen Daten in bestimmter Auflösung in einem bestimmten Koordinatensystem zusätzlich auch weitere biometrische Daten 201 erfasst werden, so dass später mehrere Identifikationsmerkmale des Unterzeichners oder auch verschiedenen Identifikationsmerkmale verschiedener Unterzeichner in das Dokument einfließen können. Dies sind beispielsweise der Druck- und der Zeitverlauf. Wie in der Fig. 4a angedeutet, werden diese biometrischen Daten 204 als separate Dateneinheit behandelt (Datenstrom).

Ist der Signaturvorgang 102 korrekt ausgeführt, die Abfrage 104 also mit ja beantwort, so wird das Signaturabbild 203 in dem weitem Verfahrensabschnitt 106 in das Dokument 200 sichtbar eingefügt. Falls vorhanden, werden die biometrischen Daten als Datenblock 201 unsichtbar an das Dokument 200 angehängt. In diesem Verfahrensabschnitt 106 werden zudem verschiedene Prüfsummen gebildet und verschiedene Verschlüsselungen ausgeführt. Diese Verfahrensschritte werden später unter Bezugnahme auf die Fig. 5 noch detailliert beschrieben.

Ist der Verfahrensabschnitt 106 abgeschlossen, so wird im Schritt 108 abgefragt, ob das Dokument 200 noch von weiteren Personen zu unterzeichnen ist, also weitere Signaturabbilder 203 und zugehörige biometrische Signaturdaten 201 mit zu integrieren sind. Ist dies der Fall, so wird zum Verfahrensschritt 102 zurück gekehrt und der oben beschrieben Verfahrensablauf für die zweite bis n-te Unterschrift durchlaufen. Sind keine weiteren Unterschriften zu integrieren, so wird zu dem Schritt 110 gemäß Fig. 3 weiter gegangen. Hierin wird abgefragt, ob ein weiteres Schlüsselpaar II konfiguriert ist. Ist dies nicht der Fall, so wird im Schritt 111 das signierte Dokument 200 mit darin eingefügtem Signaturabbild 203 und den eventuell vorhandenen biometrischen Signaturdaten 201, die als Datenblock 201' angehängt wurden, sowie weiteren Anhängen, die später erläutert werden, ausgegeben.

Ist ein Schlüsselpaar II konfiguriert, dass wird zum Verfahrensabschnitt 112 fortgeschritten. Dieser Verfahrenabschnitt 112 wird später unter Bezugnahme auf die Fig. 6 noch detailliert beschrieben. Nach dem Beenden des Verfahrensabschnitts 112 wird im Schritt 114 ein signiertes Dokument 200 mit eingefügtem Signaturabbild 203 mit speziell verschlüsselten Anhängen bereitgestellt bzw. ausgegeben. Im Schritt 116 wird das erfindungsgemäße Verfahren beendet.

In der Fig. 4 ist der grundsätzliche Aufbau eines signierten Dokuments 200 gezeigt. In dem Dokument 200 ist gemäß Schritt 106 das Signaturabbild 203 eingefügt. Das Dokument 200 kann mit einem dem jeweiligen Dateityp entsprechenden Datenverarbeitungsprogramm (wie beispielsweise Microsoft WORD) mit dem eingefügten Signaturabbild auf einem hier nicht gezeigten Display oder sonstigen Ausgabemedium lesbar bzw. hörbar dargestellt und/oder gedruckt werden. Eventuell vorhandene biometrische Signaturdaten 201 sind als unsichtbare Dateneinheit 201 an das Dokument 200 angehängt.

Unter Bezugnahme auf die Fig. 5a und 5b wird der Verfahrensabschnitt 106 gemäß Fig. 2 des erfindungsgemäßen Verfahrens beschrieben. So wird in diesem Verfahrensabschnitt 106 eine erste Prüfsumme 202 über das Dokument 200 mit dem eingefügten Signaturabbild 203 und, falls vorhanden, einschließlich den angehängten biometrischen Daten 201 mit Hilfe einer ersten Hash-Funktion gebildet. Diese erste Prüfsumme 202 ist in der Fig. 5a als "Hash 1" bezeichnet. Wie in der Fig. 5a symbolisch dargestellt, wird diese erste Prüfsumme 202 an das Dokument 200 unsichtbar angehängt.

Wie in der Fig. 5b gezeigt, die eine Fortsetzung des in der Fig. 5a gezeigten Verfahrensabschnitts 106 ist, wird nunmehr eine zweite Prüfsumme 204 über das Dokument 200 mit dem eingefügten Signaturabbild 203 (aber nicht über die unsichtbaren Anhänge 201, 202) mit Hilfe einer vorbestimmten zweiten Hash-Funktion gebildet. Diese zweite Hash-Funktion ist vorzugsweise mit der ersten Hash-Funktion identisch, sie kann aber unter Umständen von dem Benutzer des erfindungsgemäßen Signatursystems auch aus verschiedenen in dem Gerät implementierten Hash-Funktionen gewählt werden. Die zweite Prüfsumme 204 ist in der Fig. 5b als "Hash 2" in der Fig. 4 bezeichnet.

Es wird nun mittels des echten Zufallsgenerators 10 der Datenverarbeitungseinrichtung 2 ein Zufallswert 206 erzeugt und dann im Schritt 213 eine symmetrische Verschlüsselung der ersten Prüfsumme 202 und, falls vorhanden, der biometrischen Signaturdaten 201 gemeinsam mit der Prüfsumme 202 durchgeführt. Der Schlüssel für diese symmetrische Verschlüsselung 213 ist die Summe aus der zweiten Prüfsumme 204 und dem soeben erzeugten Zufallswert 206. An dem Dokument 200 mit dem eingefügten Signaturabbild 203 hängt nun der symmetrisch verschlüsselte Anhang 202' (symmetrisch verschlüsselte erste Prüfsumme 202 bzw. symmetrisch verschlüsselte erste Prüfsumme 202 und biometrische Daten) unsichtbar an dem Dokument 200 an. Mit anderen Worten: Die erste Prüfsumme 202 und, falls vorhanden die biometrischen Signaturdaten 201 sind durch symmetrisches Verschlüsseln mit einem aus der zweiten Prüfsumme 204 und einem Zufallswert 206 erzeugten Schlüssel gemeinsam symmetrisch in einem Datenstrom verschlüsselt. Im vorliegenden Fall wurde eine 448 Bit Blowfish-Verschlüsselung gewählt. Es können aber auch andere symmetrische Verschlüsselungsarten eingesetzt werden.

Der guten Ordnung halber ist anzumerken, dass es nur einen symmetrisch verschlüsselten Datenblock gibt, der entweder nur die Prüfsumme oder die Prüfsumme und die biometrischen Daten enthält. Würden die biometrischen Daten in einem extra verschlüsselten Block liegen, so wären diese einzeln, d.h. ohne die verschlüsselte Prüfsumme aus der Datei heraus lösbar. Die Verschmelzung der unsichtbaren Anhänge 201 und 202 durch die Verschlüsselung wird grafisch durch die einheitlich Einfärbung nach der Verschlüsselung und den Rahmen mit nur einem Pfeil dargestellt, der in die symmetrische Verschlüsselung 213 endet.

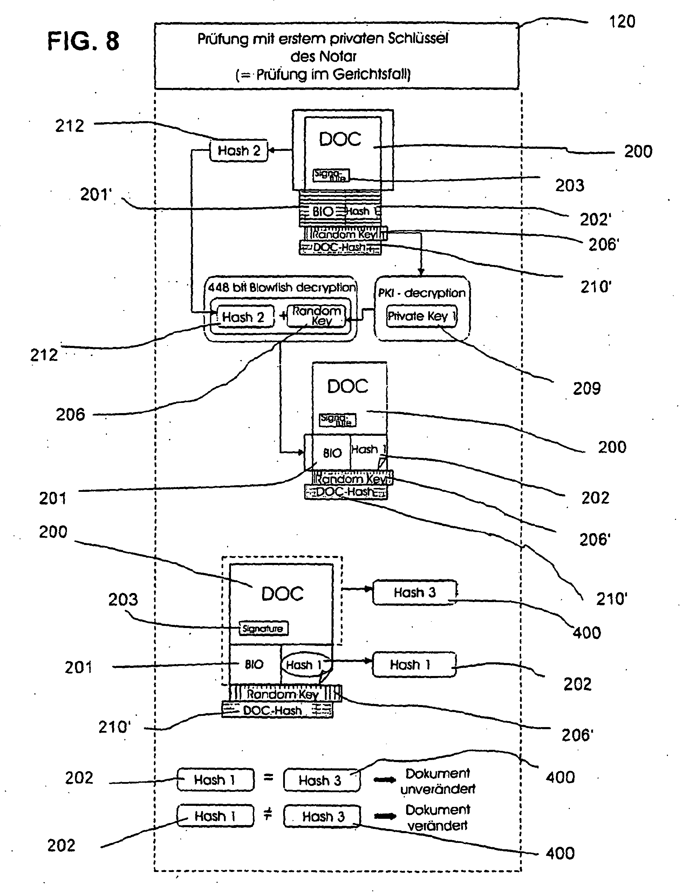

In dem Verfahrensabschnitt 106 der Fig. 5b wird zudem der obige Zufallswert 206, mit dem (als Teil des Verschlüsselungspasswortes) die symmetrische Verschlüsselung 213 durchgeführt wurde, in dem Verfahrensschritt 214 asymmetrisch verschlüsselt. Der Schlüssel für diese asymmetrische Verschlüsselung 214 ist ein erster öffentlicher Schlüssel 208 eines ersten Schlüsselpaars (208, 209), das aus einem ersten privaten Schlüssel 209 (siehe Fig. 8) und dem zugehörigen ersten öffentlichen Schlüssel 208 besteht. Der erste private Schlüssel 209 kann beispielsweise bei einem Notar hinterlegt sein. Die das erfindungsgemäße Signatursystem verwendenden Außendienstmitarbeiter und Unternehmen sollen möglichst keinen Zugriff auf diesen privaten Schlüssel 209 des ersten Schlüsselpaars 208, 209 haben, um sicherzustellen, dass weder der Außendienstmitarbeiter noch das Unternehmen selbst das Dokument 200 mit eingefügtem Signaturabbild 203 und den unsichtbaren Anhängen 201', 202', 206' ändern können. Der öffentliche Schlüssel 208 dieses ersten Schlüsselpaars 208, 209 wird in einfacher Weise in dem Signatursystem 1, 2 hinterlegt. Beispielsweise kann er in der Speichereinrichtung 4 der Datenverarbeitungseinrichtung 2 abgespeichert sein.

Wie in der Fig. 5b gezeigt, handelt es sich bei der asymmetrischen Verschlüsselung 214 um eine PKI-Verschlüsselung. Es können aber auch andere asymmetrische Verschlüsselungen eingesetzt werden. Wie in der Fig. 5b angedeutet, wird der asymmetrisch verschlüsselte Zufallswert 206 ebenfalls unsichtbar an das Dokument 200 als Anhang 206' angehängt. Damit liegt nun ein mit dem Signaturabbild 203 versehenes Dokument 200 vor. Die erste Prüfsumme 202 und, falls vorhanden, die biometrischen Signaturdaten 201, die durch eine symmetrische Verschlüsselung mit dem speziellen Schlüssel aus zweiter Prüfsumme 204 und einem Zufallswert 206 symmetrisch verschlüsselt wurden, hängen als unsichtbarer Anhang 201/202' an dem Dokument 200. Außerdem ist an dem Dokument 200 der asymmetrisch verschlüsselte Zufallswert 206, der Teil des Schlüssels für die Verschlüsselung der zweiten Prüfsumme 202 und der biometrischen Signaturdaten 201 ist, als Anhang 206' unsichtbar angehängt.

Damit ist das grundlegende Prinzip eines erfindungsgemäßen Verfahrens zum Sichern eines Dokuments 200 mit eingefügtem Signaturabbild 203 in einem Computersystem 1, 2 abgeschlossen. Über die Schnittstelle 16 der Datenverarbeitungseinheit 2 kann nun das derart geschützte und gesicherte Dokument 200 mit dem eingefügtem Signaturabbild 203 und den weiteren verschlüsselten Anhängen 201/ 202', 206' ausgegeben werden. Ein praktischer Anwendungsfall des erfindungsgemäßen Verfahrens kann beispielsweise darin bestehen, dass ein Außendienstmitarbeiter einen Versicherungsvertrag durch die zu versichernde Person mittels des Signaturgeräts 1 unterschreiben lässt. Die elektronisch erfasste Unterschrift 203 und die optional vorhandenen weiteren biometrischen Signaturdaten 201 werden dann über die Leitung 24 z.B. auf das Notebook 2 des Versicherungsvertreters übertragen und dort gemäß der zuvor erläuterten erfindungsgemäßen Verfahrensweise verschlüsselt und damit vor unbefugtem Zugriff geschützt. Dieses derart geschützte Dokument 200 mit den Anhängen 201/202', 206' und der eingefügten Signatur 203 wird dann über die Schnittstelle 16 und die Leitung 18 und einem hier nicht gezeigten Kommunikationsweg, wie beispielsweise das Internet, zu dem z.B. Versicherungsunternehmen übertragen. Dort kann das erfindungsgemäß gesicherte Dokument 200 und die vor Änderungen geschützten Anhänge 201/ 202' und 206' archiviert werden. Der zum ersten öffentlichen Schlüssel 208 des ersten Schlüsselpaars 208, 209 zugehörige erste private Schlüssel 209, mit dem eine Entschlüsselung des Anhangs 206' und dadurch ggf, des Anhangs 201/202 möglich wäre, liegt normalerweise dem Betreiberunternehmen nicht vor, sondern ist bei einem Notar hinterlegt. Gleiches gilt selbstverständlich auch für den Mitarbeiter, welcher an der Signaturerfassung beteiligt war. Damit kann im Streitfall nicht unterstellt werden, dass das Betreiberunternehmen oder der mitwirkende Mitarbeiter das bestrittene Dokument 200 bzw. den unsichtbaren Anhang 201/202 manipuliert haben.

Problem dabei ist, dass in diesem Fall auch das Unternehmen oder allgemein der Anwender des erfindungsgemäßen Signatursystems keine Möglichkeit hat, die Datenintegrität des Dokuments 200 mit der eingefügten Signatur 203 selbst zu prüfen. So wird in einer beispielhaften weiteren Ausführungsform, wie sie in der Fig. 6 gezeigt ist, der Verfahrensabschnitt 112 gemäß Fig. 3 durchgeführt. Zuvor wurde die Abfrage 110 durchgeführt, ob ein zweites Schlüsselpaar II auf der Datenverarbeitungseinrichtung 2 konfiguriert ist. Wird diese Frage mit ja beantwortet, so wird der Verfahrensabschnitt 112 durchgeführt. Bei Verneinung der Abfrage 110 wird im Schritt 111 das zuvor erläuterte signierte Dokument 200, das unverschlüsselt ist, mit den Anhängen 201', 202' und 206', die verschlüsselt sind, ausgegeben.

In dem Verfahrensabschnitt 112 wird eine erste Gesamtprüfsumme 210 über das Dokument 200 mit dem darin eingefügten Signaturabbild 203 und den unsichtbar angefügten Anhängen 201/,202', 206' mit Hilfe einer vorbestimmten dritten Hash-Funktion 206 gebildet. Anzumerken ist, dass diese dritte Hash-Funktion mit der ersten und zweiten Hash-Funktion grundsätzlich identisch ist. Sie kann aber auch unter Umständen wie die anderen Hash-Funktionen beispielsweise vom Benutzer des Signatursystems frei gewählt werden, je nachdem welche Hash-Funktion in dem System 2 bereitgestellt ist. In dem in Fig. 6 gezeigten Ausführungsbeispiel ist diese Gesamtprüfsumme 210 als "Doc-Hash" bezeichnet. Es wird nun der Schritt 112a durchgeführt, der ein asymmetrisches Verschlüsseln der Gesamtprüfsumme 210 mit einem zweiten privaten - oder öffentlichen Schlüssel 211/212 (je nach zusätzlichen Identifikationsansprüchen z.B. an die eingesetzte EDV-Einheit oder des Inhabers des zweiten Schlüsselpaars z.B. dem Außendienstmitarbeiter eines zweiten Schlüsselpaars 211, 212 umfasst. Das zweite Schlüsselpaar besteht aus dem zweiten privaten Schlüssel 211 und einem zugehörigen zweiten öffentlichen Schlüssel 212. Im vorliegenden Fall wird diese asymmetrische Verschlüsselung 112a wiederum mit einer PKI-Verschlüsselung durchgeführt. Es ist selbstverständlich auch möglich, andere asymmetrische Verschlüsselungen einzusetzen.

Die derart asymmetrisch verschlüsselte Gesamtprüfsumme 210 wird neben den Anhängen 201/202' und 206' ebenfalls als Anhang 210' unsichtbar an das Dokument 200 angehängt. Damit kann nun im Schritt 114 gemäß Fig. 3 das signierte Dokument 200 mit dem eingefügten Signaturabbild 203 und den verschlüsselten Anhängen 201/202', 206', 210' ausgegeben werden.

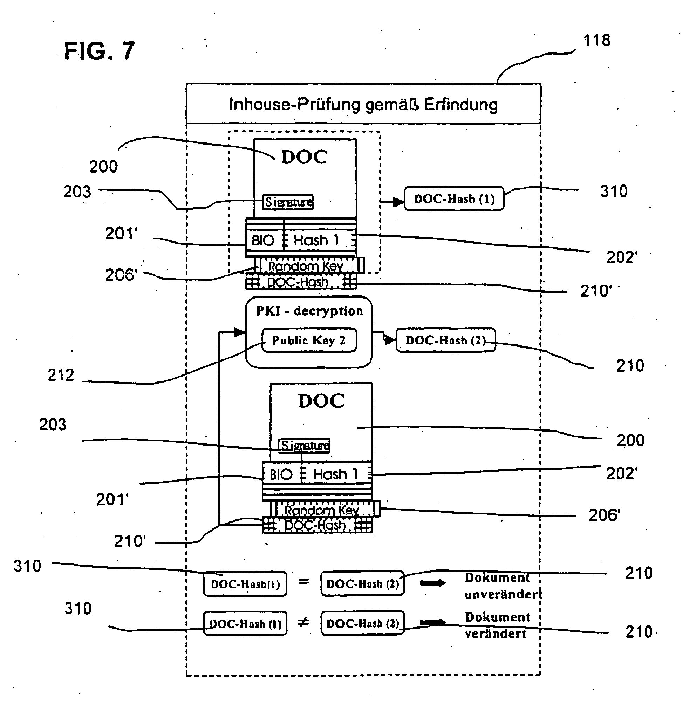

Gemäß nachfolgend erläutertem erfindungsgemäßen Verfahren zur Inhouse-Kontrolle eines Dokuments 200, dass nach dem unter Bezugnahme auf die Fig. 6 beschriebenen Verfahren weiter verschlüsselt wurde, ist es nunmehr auch möglich, die Manipulationsfreiheit des Dokuments 200 zum Zeitpunkt der Archivierung zu überprüfen. Es wird somit nach Empfang des gemäß obigem Verfahren bearbeitenden Dokuments 200 und den verschlüsselten Anhängen 201/ 202', 206', 210' die in der Fig. 7 gezeigte Verfahrensweise zur Inhouse-Kontrolle durchgeführt. Hierin wird von dem Dokument 200, wie es im Schritt 114 gemäß Fig.3 und Fig. 6 ausgegeben wurde, eine Gesamtprüfsumme 310 über das gesamte Dokument 200 mit dem darin eingefügten Signaturabbild 203 und den angefügten Anhängen 201/202' und 206' mit Hilfe der oben erwähnten zweiten Hash-Funktion durchgeführt. Wenn keine biometrischen Daten 201 vorlagen, wird nur die Prüfsumme über das Dokument 200 mit eingefügtem Signaturabbild 203, der verschlüsselten ersten Prüfsumme 202' und dem verschlüsselten Zufallswert 206' gebildet.

Außerdem erfolgt eine asymmetrische Entschlüsselung der an dem Dokument 200 angefügten ersten Gesamtprüfsumme 210' mit dem zweiten öffentlichen- oder privaten Schlüssel (je nach zusätzlichen Identifikationsansprüchen z.B. an die eingesetzte EDV-Einheit oder des Inhabers des zweiten Schlüsselpaars z.B. dem Außendienstmitarbeiter und dem dadurch gewählten privaten oder öffentlichen Schlüssels des zweiten Schlüsselpaars bei der Verschlüsselung) Schlüssel 211, 212. Diese beiden Prüfsummen 210, 310 werden nun miteinander verglichen. Falls die beiden Werte identisch sind, ist mit sehr hoher Wahrscheinlichkeit davon auszugehen, dass keine Veränderung erfolgte. Eine Veränderung kann zum einen eine Manipulation des Dokuments 200 mit dem eingefügten Signaturabbild 203 bzw. der weiteren Anhänge 201, 202 und 206 bedeuten, als auch einen Übertragungsfehler beim Übertragen des Dokuments 200 mit Anhängen 201', 202', 206' vom Außendienstmitarbeiter zum Unternehmen. Diese Prüfung, wie sie hier beschrieben wurde, ermöglicht also dem Unternehmen, das Dokument 200 auf Unversehrtheit zu überprüfen, ohne Zugriff auf die verschlüsselten biometrischen Daten 201 haben zu müssen und lässt ggf. über die ID des bei der Verschlüsselung verwendeten zweiten Schlüsselpaars Rückschlüsse auf die Person oder das Gerät zu, welchem dieses Schlüsselpaar zugeordnet werden kann.

Das Verfahren zum Prüfen des Dokuments 200 z.B. bei Gericht unter Mithilfe des Notars, also der Person, bei dem der erste private Schlüssel 209 des ersten Schlüsselpaars 208, 209 hinterlegt wurde, wird nun anhand der Fig. 8 erläutert. Es wird nur von dem Dokument 200 mit dem darin eingefügten Signaturabbild 203 eine Prüfsumme mit der zweiten Hash-Funktion gebildet. Außerdem wird der an das Dokument 200 angehängte verschlüsselte Zufallswert 206' mit Hilfe des ersten privaten Schlüssels 209 des ersten Schlüsselpaars 208, 209 entschlüsselt. Daraufhin wird die Summe der hier gebildeten Prüfsumme 212, die als Hash 2 bezeichnet ist, und des entschlüsselten Zufallswerts 206 gebildet. Dieser Summenwert wird dann zur symmetrischen Entschlüsselung der biometrischen Daten 201 und der in diesem verschlüsselten Datenblock enthaltenen ersten Prüfsumme 202' welche an das Dokument 200 angehängten sind verwendet Somit kann nun Zugriff auf die entschlüsselten biometrischen Daten 201 genommen werden. Es kann ferner nun auch die dritte Prüfsumme 400 über das Dokument 200 mit dem darin eingefügten Signaturabbild 203 und den entschlüsselten biometrischen Daten 201 mit der ersten Hash-Funktion gebildet werden.

Dann folgt die Überprüfung, ob die entschlüsselte erste Prüfsumme 202 identisch ist mit der gebildeten Prüfsumme 400. Ist dies der Fall, ist mit Sicherheit davon auszugehen, dass das Dokument und die enthaltenen biometrischen Daten unverändert sind und keiner versehentlichen Änderung oder Manipulation unterworfen wurde. Unterscheiden sich die erste Prüfsumme 202 und die gebildete Prüfsumme 400, so muss von einer versehentlichen Veränderung oder einer Manipulation ausgegangen werden. Diese Information wird nun ausgegeben.

## Patentansprüche

1. Verfahren zum Sichern eines Dokuments (200) mit eingefügtem Signaturabbild (203) in einem Computersystem (1, 2), umfassend die Verfahrensschritte:
a) Bereitstellen des als Datei in einem bestimmten Datenformat vorliegenden Dokuments (200),
b) Bereitstellen des digitalen Signaturabbildes (203),
c) Einfügen des digitalen Signaturabbildes (203) an der gewünschten Stelle in dem elektronischen Dokument (200),
d) Bilden einer ersten Prüfsumme (202) über das elektronische Dokument (200) mit dem eingefügten digitalen Signaturabbild (203) und optional vorhandener biometrischer Signaturdaten (201) mit Hilfe einer vorbestimmten ersten Hash-Funktion,
e) Bilden einer zweiten Prüfsumme (204) über das elektronische Dokument (200) mit dem eingefügten digitalen Signaturabbild (203) mit Hilfe einer vorbestimmten zweiten Hash-Funktion,
f) Erzeugen eines Zufallswertes (206),
g) Symmetrisches Verschlüsseln der ersten Prüfsumme (202), wobei der Schlüssel für die symmetrische Verschlüsselung die Summe aus der zweiten Prüfsumme (204) und dem erzeugten Zufallswert (206) ist,
h) Anhängen der symmetrisch verschlüsselten ersten Prüfsumme (202) an das Dokument (200),
i) Asymmetrisches Verschlüsseln des erzeugten Zufallswertes (206) mit einem ersten öffentlichen Schlüssel (208) eines ersten Schlüsselpaars (208, 209), das aus einem ersten privaten Schlüssel (209) und dem zugehörigen ersten öffentlichen Schlüssel (208) besteht,
j) Anfügen des asymmetrisch verschlüsselten Zufallswertes (206) an das Dokument (200).

2. Verfahren nach Anspruch 1, **dadurch gekennzeichnet, dass** die erste und zweite Hash-Funktion identisch sind.

3. Verfahren nach Anspruch 1, **dadurch gekennzeichnet, dass** für den Fall, dass weitere digitale Signaturabbilder (203) wie beispielsweise Unterschriften auf dem gleichen Dokument (200) zu leisten sind, das Verfahren die weiteren Verfahrensschritte umfasst:
k) Bereitstellen eines weiteren digitalen Signaturabbildes (203),
l) Einfügen des weiteren digitalen Signaturabbildes (203) an der gewünschten Stelle in dem elektronischen Dokument (200),
m) Bilden einer weiteren ersten Prüfsumme (202) über das elektronische Dokument (200) mit den eingefügten digitalen Signaturabbildern (203) und optional vorhandener biometrischer Signaturdaten (201) mit Hilfe der vorbestimmten ersten Hash-Funktion,
n) Bilden einer weiteren zweiten Prüfsumme (204) über das elektronische Dokument (200) mit den eingefügten digitalen Signaturabbildern (203) mit Hilfe der vorbestimmten zweiten Hash-Funktion,
o) Erzeugen eines weiteren Zufallswertes (206),
p) Symmetrisches Verschlüsseln der weiteren ersten Prüfsumme (202), wobei der Schlüssel für die symmetrische Verschlüsselung die Summe aus der weiteren zweiten Prüfsumme (204) und dem erzeugten weiteren Zufallswert (206) ist,
q) Anhängen der symmetrisch verschlüsselten weiteren ersten Prüfsumme (202) an das Dokument (200).

4. Verfahren nach einem der voranstehenden Ansprüche, ferner umfassend:
c1) Bereitstellen der biometrischen Signaturdaten (201) in digitaler Form,
c2) Anfügen der biometrischen Signaturdaten (201) an das Dokument (200), und
wobei:
der Schritt d) das Bilden der ersten Prüfsumme (202) über das Dokument (200) mit dem eingefügten digitalen Signaturabbild (203) und den angefügten biometrischen Signaturdaten (201) mit Hilfe der vorbestimmten ersten Hash-Funktion beinhaltet,
der Schritt g) das symmetrische Verschlüsseln sowohl der biometrischen Signaturdaten (201) als auch der ersten Prüfsumme (202) in einem verschlüsselten Datenblock beinhaltet und der Schlüssel für die symmetrische Verschlüsselung die Summe aus der zweiten Prüfsumme (204) und dem erzeugten Zufallswert (206) ist, und
der Schritt h) das Anhängen der gemeinsam in dem verschlüsselten Datenblock symmetrisch verschlüsselten biometrischen Signaturdaten (201) und der symmetrisch verschlüsselten ersten Prüfsumme (202) an das Dokument (200) beinhaltet.

5. Verfahren nach Anspruch 1 oder 2, ferner umfassend die nachfolgenden Schritte:
k) Bilden einer ersten Gesamtprüfsumme (210) über das gesamte Dokument (200) mit dem darin eingefügten digitalen Signaturabbild (203) und den angefügten Anhängen (201', 202', 206') mit Hilfe einer vorbestimmten dritten Hash-Funktion,
l) Asymmetrisches Verschlüsseln der in Schritt k) erstellten Gesamtprüfsumme (210) mit wahlweise einem zweiten privaten oder öffentlichen Schlüssel (211, 212) eines zweiten Schlüsselpaars (211, 212), das aus dem zweiten privaten Schlüssel (211) und einem zugehörigen zweiten öffentlichen Schlüssel (212) besteht, und
m) Anfügen der asymmetrisch verschlüsselten ersten Gesamtprüfsumme (210) an das Dokument (200),
n) Ausgeben des Dokuments (200) mit eingefügtem sichtbarem digitalen Signaturabbild (203) und den verschlüsselten unsichtbaren Anhängen (201', 202', 206', 210').

6. Verfahren nach Anspruch 5, **dadurch gekennzeichnet, dass** die erste, zweite und dritte Hash-Funktion identisch sind.

7. Verfahren zur Prüfung der Echtheit eines unterschriebenen Dokuments (200), das gemäß einem Verfahren nach einem Ansprüche 1-6 gesichert wurde, umfassend die Schritte:
a) Bilden einer Prüfsumme mit der zweiten Hash-Funktion nur über das Dokument (200) bzw. den sichtbaren Dokumenteninhalt mit dem darin eingefügten digitalen Signaturabbild (203)
b) Entschlüsseln des an das Dokument (200) angehängten verschlüsselten Zufallswertes (206') mit Hilfe des ersten privaten Schlüssels (209) des ersten Schlüsselpaars (208),
c) Bilden der Summe aus der in Schritt a) gebildeten Prüfsumme (212) und des entschlüsselten Zufallswerts (206),
d) Bilden einer dritten Prüfsumme (400) über das Dokument (200) mit dem darin eingefügten digitalen Signaturabbild (203) und den entschlüsselten biometrischen Daten (201) mit der ersten Hash-Funktion,
e) Vergleich der entschlüsselten Prüfsumme (202) und der neu gebildeten Prüfsumme (400),
f) Ausgabe der entschlüsselten biometrischen Daten zur Überprüfung durch einen Sachverständigen wie beispielsweise im Rahmen der Verwendung zur Personenidentifikation.

8. Signatursystem zum Unterzeichnen eines Dokuments (200) und zur Bereitstellung einer sicheren Datei mit eingefügtem Unterschriftbild (203), umfassend:
a) ein Signaturgerät(1) mit:
i. einem Signaturerfassungsfenster (5), auf dem mittels einer Schreibeinrichtung (26) eine Signatur (203) durchzuführen ist,
ii. eine Signaturdatenerfassungseinrichtung (5a-5g), mit der wenigstens die Koordinaten der auf dem Signaturerfassungsfenster (5) geleisteten Signatur (203) in einer vorbestimmten Auflösung in einem vorgegebenen Koordinatensystem (x, y) erfassbar sind,
iii. eine eindeutige Hardware bzw. Geräte ID, welche gemeinsam mit den erfassten Daten übertragen wird.
iv. eine Vorrichtung zur geräteinternen Verschlüsselung der Daten vor Ihrer Übertragung zur Datenerfassungseinrichtung.
b) eine Datenverarbeitungseinrichtung (2), die mit dem Signaturgerät (1) verbunden ist, mit:
i. einer Speichereinrichtung (4), in der mindestens das Dokument (200) und die Signaturdaten (203) abzuspeichern sind,
ii. einer ersten Prüfsummenbildnereinrichtung (6a) zum Bilden einer ersten Prüfsumme (202) über das Dokument (200) mit eingefügte digitalen Signaturabbild (203) und die eventuell angefügten biometrischen Signaturdaten (201) mit Hilfe einer vorbestimmten ersten Hash-Funktion,
iii. einer zweiten Prüfsummenbildnereinrichtung (6b) zum Bilden einer zweiten Prüfsumme (204) über das Dokument (200) und dem in das Dokument (200) eingefügten digitalen Signaturabbild (203) mit Hilfe einer zweiten Hash-Funktion,
iv. einer dritten Prüfsummenbildnereinrichtung (6c) zum Bilden einer ersten Gesamtprüfsumme (310) über das Dokument (200) mit dem eingefügten digitalen Signaturabbild (203) und an das Dokument angefügten Anhängen (201', 202', 206') mit Hilfe einer dritten Hash-Funktion,
v. einem Zufallszahlengenerator (10) zum Erzeugen eines Zufallswerts (206),
vi. einer symmetrischen Verschlüsselungseinrichtung (12) zum symmetrischen Verschlüsseln der optional vorhandenen biometrischen Signaturdaten (201) und der ersten Prüfsumme (202), wobei der Schlüssel für die symmetrische Verschlüsselung die Summe aus der zweiten Prüfsumme (204) und einem mit dem Zufallsgenerator (10) erzeugten Zufallswert (206) ist,
vii. einer asymmetrische Verschlüsselungseinrichtung (12) zum asymmetrischen Verschlüsseln des mit dem Zufallszahlengenerator (10) erzeugten Zufallswerts (206) mit einem zweiten privaten Schlüssel (211) eines zweiten Schlüsselpaars (211, 212), das aus dem zweiten privaten Schlüssel (211) und einem zugehörigen zweiten öffentlichen Schlüssel (212) besteht, und
c) eine Ausgabeschnittstelle (16), die dazu ausgebildet ist, das Dokument (200) mit eingefügtem sichtbarem digitalen Signaturabbild (203) und den unsichtbar angehängten Anhängen (201', 202', 206', 210') bereitzustellen, wobei es sich bei den unsichtbar angehängten Anhängen um die optional vorhandenen, mittels der symmetrischen Verschlüsselungseinrichtung (12) verschlüsselten biometrischen Signaturdaten (201'), die mittels der symmetrischen Verschlüsselungseinrichtung (12) verschlüsselte erste Prüfsumme (202') und den mittels der asymmetrischen Verschlüsselungseinrichtung (12) verschlüsselten Zufallswert (206') handelt.

9. Signatursystem nach Anspruch 8, **dadurch gekennzeichnet, dass** die Signaturdatenerfassungseinrichtung (5a-5g) auch weitere oder andere biometrische Daten erfasst.

10. Signatursystem nach Anspruch 9, **dadurch gekennzeichnet, dass** die Signaturdatenerfassungseinrichtung zur Erfassung weiterer bzw. alternativer biometrischen Daten zumindest eine der nachfolgenden Einrichtungen enthält:
- Druckerfassungsvorrichtung (5a), mit der der Druckverlauf der vom Unterzeichner geleisteten Signatur (203) in einer vorbestimmten Auflösung in einer vorgegebenen Druckgröße erfasst wird,
- Zeitverlauferfassungseinrichtung (5b), mit der der Zeitverlauf der vom Unterzeichner geleisteten Signatur (203) in einer vorbestimmten Auflösung in einer vorgegebenen Zeitgröße in Bezug auf ein vorgegebenes Koordinatensystem (x, y) erfasst wird,
- Fingerabdruckerfassungseinrichtung (5c), mit der der Fingerabdruck zumindest eines Fingers einer vorbestimmten Hand des Unterzeichners, der die Signatur (203) geleistet hat, in einer vorbestimmten Auflösung in einem vorgegebenen Koordinatensystem (x, y) erfasst wird,
- Handabdruckerfassungseinrichtung (5d), mit der der Handabdruck einer vorbestimmten Hand des Unterzeichners, der die Signatur (203) geleistet hat, in einer vorbestimmten Auflösung in einem vorgegebenen Koordinatensystem (x, y) erfasst wird,
- Gesichtserfassungseinrichtung (5e), mit der zumindest bestimmte Gesichtspartien des Unterzeichners, der die Signatur (203) geleistet hat, in einer vorbestimmten Auflösung in einem vorgegebenen Koordinatensystem (x, y) erfasst werden,
- Stimmmustererfassungseinrichtung (5f), mit der ein Stimmmuster eines Unterzeichners, der die Signatur (203) geleistet hat, in einer vorbestimmten Auflösung in einem vorgegebenen Koordinatensystem (x, y) erfasst wird,
- Iris- und/oder Retinaerfassungseinrichtung (5g), mit der zumindest bestimmte Bereiche der Iris und/oder der Retina eines vorbestimmten Auges des Unterzeichners, der die Signatur (203) geleistet hat, in einer vorbestimmten Auflösung in einem vorgegebenen Koordinatensystem (x, y) erfasst werden.

11. Computerlesbares Medium mit darauf befindlichen durch einen Computer (2) ausführbaren Anweisungen, die bewirken, dass das Computersystem (1, 2) das Verfahren zum Sichern eines Dokuments (200) mit eingefügtem digitalen Signaturabbild (203) nach einem der Ansprüche 1-6 ausführt.

12. Computerprogramm umfassend durch einen Computer (2) ausführbare Anweisungen, die bewirken, dass das Computersystem (1, 2) das Verfahren zum Sichern eines Dokumentes (200) mit eingefügtem digitalen Signaturabbild (203) nach einem der Ansprüche 1-6 ausführt.

13. Computerlesbares Medium mit darauf befindlichen durch einen Computer (2) ausführbaren Anweisungen, die bewirken, dass das Computersystem (1, 2) das Verfahren zur Prüfung der Echtheit eines unterschriebenen Dokuments (200) nach Anspruch 7 ausführt.

14. Computerprogramm umfassend durch einen Computer (2) ausführbare Anweisungen, die bewirken, dass das Computersystem (1, 2) das Verfahren zur Prüfung der Echtheit eines unterschriebenen Dokuments (200) nach Anspruch 7 ausführt.

## Claims

1. A method for safeguarding a document (200) with inserted signature image (203) in a computer system (1, 2), comprising the method steps:
a) providing the document (200) existing in a particular data format as a data set,
b) providing the digital signature image (203),
c) inserting the digital signature image (203) at the desired location in the electronic document (200),
d) forming a first check sum (202) for the electronic document (200) with the inserted digital signature image (203) and optionally-provided biometric signature data (201) using a predetermined first hash function,
e) forming a second check sum (204) for the electronic document (200) with the inserted digital signature image (203) using a predetermined second hash function,
f) generating a random value (206),
g) symmetrically encrypting the first check sum (202), wherein the key for the symmetric encryption is the sum of the second check sum (204) and the generated random value (206),
h) attaching the symmetrically-encrypted first check sum (202) to the document (200),
i) asymmetrically encrypting the generated random value (206) with a first public key (208) of a first key pair (208, 209), which is comprised of a first private key (209) and the associated first public key (208), and
j) adding the asymmetrically-encrypted random value (206) to the document (200).

2. The method according to claim 1, **characterized in that** the first and second hash functions are identical.

3. The method according to claim 1, **characterized in that** in case of further digital signature images (203) as e.g. signatures are to be made on the same document (200), the method comprises the further method steps:
k) providing a further digital signature image (203),
l) inserting the further digital signature image (203) at the desired location in the electronic document (200),
m) forming a further first check sum (202) for the electronic document (200) with the inserted digital signature images (203) and optionally-provided biometric signature data (201) using the predetermined first hash function,
n) forming a further second check sum (204) for the electronic document (200) with the inserted digital signature images (203) using the predetermined second hash function,
o) generating a further random value (206),
p) symmetrically encrypting the further first check sum (202), wherein the key for the symmetric encryption is the sum of the further second check sum (204) and the generated further random value (206),
q) attaching the symmetrically-encrypted further first check sum (202) to the document (200).

4. The method according to any one of the preceding claims, further comprising:
c1) providing biometric signature data (201) in digital form,
c2) adding the biometric signature data (201) to the document (200), and wherein:
the step d) includes the forming of the first check sum (202) for the document (200) with the inserted digital signature image (203) and the added biometric signature data (201) using the predetermined first hash function,
the step g) includes the symmetrically encrypting of the biometric signature data (201) as well as of the first check sum (202) in an encrypted data block, wherein the key for the symmetric encryption is the sum of the second check sum (204) and the generated random value (206), and
the step h) includes the adding of the biometric signature data (201) symmetrically encrypted together in a data block and of the symmetrically-encrypted first check sum (202) to the document (200).

5. The method according to claim 1 or 2, further comprising the following steps:
k) forming a first overall check sum (210) for the entire document (200) with the digital signature image (203) inserted therein and the added attachments (201', 202', 206') using a predetermined third hash function,
l) asymmetrically encrypting the overall check sum (210) created in step k) with alternatively a second private or public key (211, 212) of a second key pair (211, 212), which is comprised of the second private key (211) and an associated second public key (212), and
m) adding the asymmetrically-encrypted first overall check sum (210) to the document (200),
n) outputting the document (200) with inserted, visible digital signature image (203) and the encrypted, invisible attachments (201', 202', 206', 210').

6. The method according to claim 5, **characterized in that** the first, second and third hash functions are identical.

7. A method for examining the authenticity of a signed document (200), which was safeguarded according to a method according to any one of claims 1-6, comprising the steps:
a) forming a check sum (212) with the second hash function only for the document (200) or the visible document contents with the digital signature image (203) inserted therein,
b) decoding the encrypted random value (206') attached to the document (200) using the first private key (209) of the first key pair (208, 209),
c) forming the sum of the check sum (212) formed in step a) and the decoded random value (206),
d) forming a third check sum (400) for the document (200) with the digital signature image (203) inserted therein and the decoded biometric data (201) with the first hash function,
e) comparing the decoded check sum (202) and the newly-formed check sum (400),
f) outputting the decoded biometric data for verification by an expert, such as for example, in the context of the use for the identification of a person.

8. A signature system for signing a document (200) and for providing a safeguarded data set with inserted signature image (203), comprising:
a) a signature apparatus (1) having:
i. a signature capture window (5) configured such that a signature (203) may be made using a writing implement (26),
ii. a signature data capture device (5a-5g) configured to obtain at least the coordinates of the signature (203) made on the signature capture window (203) in a predetermined resolution in a preset coordinate system (x, y),
iii. an explicit hardware and/or apparatus ID, which is transmitted together with the captured data,
iv. a device for encrypting the data before its transmission to the data capture device internally in the signature apparatus.
b) a data processing device (2), which is connected with the signature apparatus (1), having:
i. a storage device (4) configured to store at least the document (200) and the signature data (203),
ii. a first check sum forming device (6a) for forming a first check sum (202) for the document (200) with inserted digital signature image (203) and the optionally-added biometric data signature data (201) using a predetermined first hash function,
iii. a second check sum forming device (6b) for forming a second check sum (204) for the document (200) and the digital signature image (203) inserted into the document (200) using a second hash function,
iv. a third check sum forming device (6c) for forming a first overall check sum (310) for the document (200) with the inserted digital signature image (203) and the attachments (201', 202', 206') added to the document using a third hash function,
v. a random number generator (10) for generating a random value (206),
vi. a symmetric encryption device (12) for symmetrically encrypting the optionally-provided biometric signature data (210) and the first check sum (202), wherein the key for the symmetric encryption is the sum of the second check sum (204) and a random value (206) generated with the random generator (10),
vii. an asymmetric encryption device (12) for asymmetrically encrypting the random value (206) generated with the random number generator (10) with a second private key (211) of a second key pair (211, 212), which is comprised of the second private key (211) and an associated second public key (212), and
c) an output interface (16) configured to provide the document (200) with the inserted, visible digital signature image (203) and the invisible, attached attachments (201', 202', 206', 210'), wherein the invisible, attached attachments are the optionally-provided biometric signature data (201') encrypted using the symmetric encryption device (12), the first check sum (202') encrypted using the symmetric encryption device (12) and the random value (206') encrypted using the asymmetric encryption device (12).

9. The signature system according to claim 8, **characterized in that** the signature capture device (5a-5g) also captures additional or other biometric data.

10. The signature system according to claim 9, **characterized in that** the signature data capture device for capturing additional or alternative biometric data comprises at least one of the following devices:
- a pressure detection device (5a) with which the pressure progression of the signature (203) made by a signer in a predetermined resolution in a preset pressure unit is being captured,
- a time period detection device (5b) with which the time progression of the signature (203) made by a signer in a predetermined resolution in a preset time unit with reference to a preset coordinate system (x, y) is being captured,
- a fingerprint capture device (5c) with which a fingerprint of at least one finger of a predetermined hand of a signer, who has made the signature (203), in a predetermined resolution in a preset coordinate system (x, y) is being captured,
- a handprint capturing device (5d) with which the handprint of a predetermined hand of a signer, who has made the signature (203), in a predetermined resolution in a present coordinate system (x, y) is being captured,
- a face capture device (5e) with which at least certain facial features of a signer, who has made the signature (203), in a predetermined resolution in a present coordinate system (x, y) are being captured,
- a voice sample capture device (5f) with which a voice sample of a signer, who has made the signature (203), in a predetermined resolution is being captured,
- an iris- and/or retina capture device (5g) with which at least certain areas of the iris and/or the retina of a predetermined eye of a signer, who has made the signature (203), in a predetermined resolution in a present coordinate system (x, y) are being captured.

11. A computer-readable medium having instructions thereon executable by a computer (2) that cause the computer system (1, 2) to perform the method for safeguarding a document (200) with inserted digital signature image (203) according to any one of claims 1-6.

12. A computer program comprising instructions executable by a computer (2) that cause the computer system (1, 2) to perform the method for safeguarding a document (200) with inserted digital signature image (203) according to any one of claims 1-6.

13. A computer-readable medium having instructions thereon executable by a computer (2) that cause the computer system (1, 2) to perform the method for examining the authenticity of a signed document (200) according to claim 7.

14. A computer program comprising instructions executable by a computer (2) that cause the computer system (1, 2) to perform the method for examining the authenticity of a signed document (200) according to claim 7.

## Revendications

1. Procédé de sécurisation d'un document (200) avec une image de signature incorporée (203) dans un système informatique (1, 2) comprenant les étapes de procédé :
a) production du document (200) se présentant comme un fichier dans un format de données déterminé,
b) production de l'image de signature numérique (203),
c) incorporation de l'image de signature numérique (203) à l'endroit voulu dans le document électronique (200),
d) formation d'une première somme de contrôle pour le document électronique (200) avec l'image de signature numérique incorporée (203) et des données de signature biométriques (201) facultativement présentes à l'aide d'une première fonction de hachage prédéterminée,
e) formation d'une deuxième somme de contrôle (204) pour le document électronique (200) avec l'image de signature numérique incorporée (203) à l'aide d'une deuxième fonction de hachage prédéterminée,
f) génération d'une valeur aléatoire (206),
g) chiffrement symétrique de la première somme de contrôle (202), la clé pour le chiffrement symétrique étant la somme de la deuxième somme de contrôle (204) et de la valeur aléatoire générée (206),
h) annexion de la première somme de contrôle (202) à chiffrement symétrique au document (200),
i) chiffrement asymétrique de la valeur aléatoire générée (206) avec une première clé publique (208) d'une première paire de clés (208, 209) qui se compose d'une première clé privée (209) et de la première clé publique (208) associée,
j) ajout de la valeur aléatoire (206) à chiffrement asymétrique au document (200).

2. Procédé selon la revendication 1, **caractérisé en ce que** les première et deuxième fonctions de hachage sont identiques.

3. Procédé selon la revendication 1, **caractérisé en ce que** dans le cas où d'autres images de signature numérique (203) comme par exemple des signatures sont à apposer sur le même document (200), le procédé comprend les étapes de procédé supplémentaires :
k) production d'une image de signature numérique supplémentaire (203),
l) incorporation de l'image de signature numérique supplémentaire (203) à l'endroit voulu dans le document électronique (200),
m) formation d'une première somme de contrôle supplémentaire (202) pour le document électronique (200) avec les images de signature numérique incorporées (203) et des données de signature biométriques (201) facultativement présentes à l'aide la première fonction de hachage prédéterminée,
n) formation d'une deuxième somme de contrôle supplémentaire (204) pour le document électronique (200) avec les images de signature numérique incorporées (203) à l'aide de la deuxième fonction de hachage prédéterminée,
o) génération d'une valeur aléatoire supplémentaire (206),
p) chiffrement symétrique la première somme de contrôle supplémentaire (202), la clé pour le chiffrement symétrique étant la somme de la deuxième somme de contrôle supplémentaire (204) et de la valeur aléatoire générée (206),
q) annexion de la première somme de contrôle supplémentaire (202) à chiffrement symétrique au document (200).

4. Procédé selon l'une quelconque des revendications précédentes, comprenant en outre :
c1) production des données de signature biométriques (201) sous forme numérique,
c2) ajout des données de signature biométriques (201) au document (200), et
dans lequel
l'étape d) comprend la formation de la première somme de contrôle (202) pour le document (200) avec l'image de signature numérique incorporée (203) et les données de signature biométriques annexées ajoutées (201) à l'aide de la première fonction de hachage prédéterminée,
l'étape g) comprend le chiffrement symétrique tant des données de signature biométriques (201) que de la première somme de contrôle (202) dans un bloc de données chiffré et la clé pour le chiffrement symétrique est la somme de la deuxième somme de contrôle (204) et de la valeur aléatoire générée (206), et
l'étape h) comprend l'annexion des données de signature biométriques (201) à chiffrement symétrique et de la première somme de contrôle (202) à chiffrement symétrique se trouvant ensemble dans le bloc de données chiffré au document (200).

5. Procédé selon l'une quelconque des revendications 1 ou 2, comprenant en outre les étapes suivantes :
k) formation d'une première somme de contrôle totale (210) pour tout le document (200) avec l'image de signature numérique y incorporée (203) et les annexes ajoutées (201', 202', 206') à l'aide d'une troisième fonction de hachage prédéterminée,
l) chiffrement asymétrique de la somme de contrôle totale (210) établie à l'étape k) avec au choix une deuxième clé privée ou publique (211, 212) d'une deuxième paire de clés (211, 212) qui se compose d'une deuxième clé privée (211) et d'une deuxième clé publique (212) associée, et
m) ajout de la première somme de contrôle totale (210) à chiffrement asymétrique au document (200),
n) sortie du document (200) avec image de signature numérique incorporée visible (203) et les annexes chiffrées invisibles (201',202', 206', 210').

6. Procédé selon la revendication 5, **caractérisé en ce que** les première, deuxième et troisième fonctions de hachage sont identiques.

7. Procédé de contrôle de l'authenticité du document signé (200), qui a été sécurisé selon un procédé selon l'une des revendications 1 - 6, comprenant les étapes:
a) formation d'une somme de contrôle avec la deuxième fonction de hachage uniquement pour le document (200) ou le contenu visible du document avec l'image de signature numérique (203) y incorporée,
b) déchiffrement de la valeur aléatoire chiffrée (206') annexée au document (200) à l'aide de la première clé privée (209) de la première paire de clés (208, 209),
c) formation de la somme à partir de la somme de contrôle (212) formée à l'étape a) et de la valeur aléatoire déchiffrée (206),
d) formation d'une troisième somme de contrôle (400) pour le document (200) avec l'image de signature numérique (203) y incorporée et les données biométriques déchiffrées (201) avec la première fonction de hachage,
e) comparaison de la somme de contrôle (202) déchiffrée et de la somme de contrôle (400) nouvellement formée,
f) sortie des données biométriques déchiffrées à des fins de contrôle par un expert comme par exemple dans le cadre de l'utilisation à des fins d'identification personnelle.

8. Système de signature pour signer un document (200) et pour produire un fichier sécurisé avec image de signature (203) incorporée, comprenant
a) un appareil de signature (1) avec:
i. une fenêtre de saisie de signature (5) sur laquelle une signature (203) est à effectuer au moyen d'un dispositif d'écriture (26),
ii. un dispositif de saisie de données de signature (5a - 5g), avec lequel au moins les coordonnées de la signature (203) apposée sur la fenêtre de saisie de signature (5) peuvent saisies dans une résolution prédéterminée dans un système de coordonnées (x, y) prédéfini,
iii. une ID de matériel ou d'appareils explicite qui est transmise conjointement avec les données saisies,
iv. un dispositif pour le chiffrement des données à l'intérieur des appareils avant leur transmission vers le dispositif de saisie des données.
b) un dispositif de traitement des données (2) qui est connecté à l'appareil de signature (1), avec:
i. un dispositif de stockage (4) dans lequel au moins le document (200) et les données de signature (203) sont à stocker,
ii. un premier dispositif de formation de somme de contrôle (6a) pour former une première somme de contrôle (202) pour le document (200) avec image de signature numérique (203) incorporée et les données de signature biométriques (201) éventuellement ajoutées à l'aide d'une première fonction de hachage prédéterminée,
iii. un deuxième dispositif de formation de somme de contrôle (6b) pour former une deuxième somme de contrôle (204) pour le document (200) et l'image de signature numérique (203) incorporée dans le document (200) à l'aide d'une deuxième fonction de hachage,
iv. un troisième dispositif de formation de somme de contrôle (6c) pour former une première somme de contrôle totale (310) pour le document (200) avec l'image de signature numérique (203) incorporée et des annexes (201', 202', 206') ajoutées au document à l'aide d'une troisième fonction de hachage,
v. un générateur de nombres aléatoires (10) pour générer une valeur aléatoire (206),
vi. un dispositif de chiffrement symétrique (12) pour le chiffrement symétrique des données de signature biométriques (201) facultativement présentes et de la première somme de contrôle (202), la clé pour le chiffrement symétrique étant la somme de la deuxième somme de contrôle (204) et d'une valeur aléatoire (206) générée avec le générateur de nombres aléatoires (10),
vii. un dispositif de chiffrement asymétrique (12) pour le chiffrement asymétrique de la valeur aléatoire (206) générée par le générateur de nombres aléatoires (10) avec une deuxième clé privée (211) d'une deuxième paire de clés (211, 212) qui se compose de la deuxième clé privée (211) et d'une deuxième clé publique (212) associée, et
c) une interface de sortie (16) qui est conçue pour produire le document (200) avec image de signature numérique (203) visible incorporée et les annexes (201', 202', 206', 210') annexées de manière invisible, s'agissant en ce qui concerne les annexes annexées de manière invisible des données de signature biométriques (201') chiffrées au moyen du dispositif de chiffrement symétrique (12) facultativement présentes, de la première somme de contrôle (202') chiffrée au moyen du dispositif de chiffrement symétrique (12) et de la valeur aléatoire (206') chiffrée au moyen du dispositif de chiffrement asymétrique (12).

9. Système de signature selon la revendication 8, **caractérisé en ce que** le dispositif de saisie de données de signature (5a - 5g) saisit également des données biométriques supplémentaires ou autres.

10. Système de signature selon la revendication 9, **caractérisé en ce que** le dispositif de saisie de données de signature comprend pour saisir des données biométriques supplémentaires ou alternatives:
- un dispositif de détection de pression (5a) avec lequel est saisie la courbe de pression de la signature (203) apposée par le signataire dans une résolution prédéterminée dans une grandeur de pression prédéfinie,
- un dispositif de détection d'écoulement de temps (5b) avec lequel est saisi l'écoulement de temps de la signature (203) apposée par le signataire dans une résolution prédéterminée dans une grandeur de temps prédéfinie par rapport à un système de coordonnées (x, y) prédéfini,
- un dispositif de saisie d'empreinte digitale (5c) avec lequel est saisie l'empreinte digitale d'au moins un doigt d'une main prédéterminée du signataire qui a apposé la signature (203) dans une résolution prédéterminée dans un système de coordonnées (x, y) prédéfini,
- un dispositif de saisie d'empreinte de main (5d) avec lequel est saisie l'empreinte de main d'une main prédéterminée du signataire, qui a apposé la signature (203) dans une résolution prédéterminée dans un système de coordonnées (x, y) prédéfini,
- un dispositif de saisie de visage (5e) avec lequel sont saisies au moins des parties déterminées du visage du signataire qui a apposé la signature (203) dans une résolution prédéterminée dans un système de coordonnées (x, y) prédéfini,
- un dispositif de saisie d'échantillon de voix (5f) avec lequel est saisi un échantillon de la voix d'un signataire qui a apposé la signature (203) dans une résolution prédéterminée dans un système de coordonnées (x, y) prédéfini,
- un dispositif de saisie d'iris et / ou de rétine (5g) avec lequel sont saisies au moins des zones déterminées de l'iris et / ou de la rétine d'un oeil prédéterminé du signataire qui a apposé la signature (203) dans une résolution prédéterminée dans un système de coordonnées (x, y) prédéfini.

11. Support lisible par ordinateur avec des instructions se trouvant sur celui-ci et exécutables par un ordinateur (2) qui ont pour effet que le système informatique (1, 2) exécute le procédé de sécurisation d'un document (200) avec image de signature numérique (203) incorporée selon une des revendications 1 - 6.

12. Programme informatique comprenant des instructions exécutables par un ordinateur (2) qui ont pour effet que le système informatique (1, 2) exécute le procédé de sécurisation d'un document (200) avec image de signature numérique (203) incorporée selon l'une des revendications 1 - 6.

13. Support lisible par ordinateur avec des instructions se trouvant sur celui-ci et exécutables par un ordinateur (2) qui ont pour effet que le système informatique (1, 2) exécute le procédé de contrôle de l'authenticité d'un document (200) signé selon la revendication 7.

14. Programme informatique comprenant des instructions exécutables par un ordinateur (2) qui ont pour effet que le système informatique (1, 2) exécute le procédé de contrôle de l'authenticité d'un document (200) signé selon la revendication 7.
